# EUROPEAN PATENT APPLICATION

(11) **EP 4 221 396 A1**
(43) Date of publication of application: **02.08.2023**
(21) Application number: 21872955.6
(22) Date of filing: 24.09.2021
(51) Int. Cl.: H04W 72/04, H04W 72/08, H04W 76/28, H04W 4/40, H04W 92/18

(54) **METHOD AND APPARATUS FOR SCHEDULING SIDELINK DRX THROUGH SIDELINK RESOURCE POOL CONFIGURATION IN NR V2X**

(30) Priority: 24.09.2020 KR 20200124169; 30.08.2021 KR 20210114432; 02.09.2021 KR 20210117164; 13.09.2021 KR 20210121408
(71) Applicant: LG Electronics Inc., Yeongdeungpo-gu Seoul, 07336 (KR)
(72) Inventor: PARK, Giwon, Seoul 06772 (KR); BACK, Seoyoung, Seoul 06772 (KR); HONG, Jongwoo, Seoul 06772 (KR)
(74) Representative: Mooser, Sebastian Thomas
(86) International application number: PCT/KR2021/013062
(87) International publication number: WO 2022/065927

(57) **Abstract**

Presented is a method by which a first apparatus performs wireless communication. The method may comprise the steps of receiving information about a first sidelink (SL) discontinuous reception (DRX) configuration and a SL resource pool from a base station; selecting the SL resource pool on the basis of a transmission profile; transmitting, to a second apparatus on the basis of the SL resource pool and the first SL DRX configuration, first sidelink control information (SCI) for scheduling a physical sidelink shared channel (PSSCH) through a physical sidelink control channel (PSCCH); and transmitting second SCI or SL data to the second apparatus through the PSSCH on the basis of the SL resource pool and the first SL DRX configuration.

## Description

### TECHNICAL FIELD

This disclosure relates to a wireless communication system.

### BACKGROUND

Sidelink (SL) communication is a communication scheme in which a direct link is established between User Equipments (UEs) and the UEs exchange voice and data directly with each other without intervention of an evolved Node B (eNB). SL communication is under consideration as a solution to the overhead of an eNB caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PCS interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR). Herein, the NR may also support vehicle-to-everything (V2X) communication.

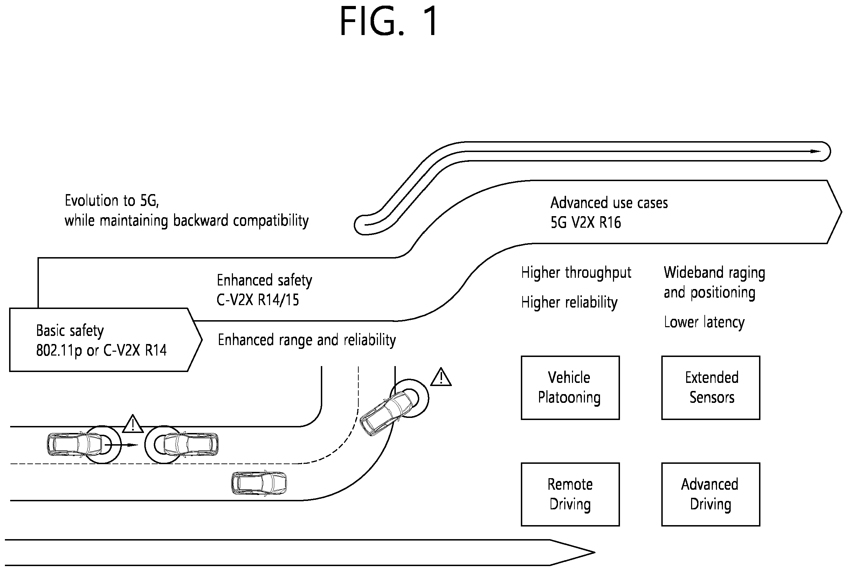

FIG. 1 is a drawing for describing V2X communication based on NR, compared to V2X communication based on RAT used before NR. The embodiment of FIG. 1 may be combined with various embodiments of the present disclosure.

Regarding V2X communication, a scheme of providing a safety service, based on a V2X message such as Basic Safety Message (BSM), Cooperative Awareness Message (CAM), and Decentralized Environmental Notification Message (DENM) is focused in the discussion on the RAT used before the NR. The V2X message may include position information, dynamic information, attribute information, or the like. For example, a LTE may transmit a periodic message type CAM and/or an event triggered message type DENM to another UE.

Thereafter, regarding V2X communication, various V2X scenarios are proposed in NR. For example, the various V2X scenarios may include vehicle platooning, advanced driving, extended sensors, remote driving, or the like.

### SUMMARY

Meanwhile, in sidelink communication, new radio (NR) vehicle to everything (V2X) of release 16 did not support a power saving operation of the UE, and the power saving operation of the LTE (e.g., a pedestrian LTE) can be supported from NR V2X of release 17. For example, a sidelink DRX configuration may be transferred from a V2X layer to an access stratum (AS) layer. In this case, for example, the sidelink DRX configuration transferred from the V2X layer may not be aligned with a resource pool configured by the base station to the UE.

In an embodiment, proposed is a method for performing wireless communication by a first device. The method may comprise: receiving, from a base station, information on an SL resource pool and a first sidelink (SL) discontinuous reception (DRX) configuration; selecting the SL resource pool based on a transmission profile; transmitting, to a second device, first sidelink control information (SCI) for scheduling a physical sidelink shared channel (PSSCH) through a physical sidelink control channel (PSCCH), based on the SL resource pool and the first SL DRX configuration; and transmitting, to the second device, second SCI or SL data through the PSSCH based on the SL resource pool and the first SL DRX configuration.

In an embodiment, proposed is a first device adapted to perform wireless communication. The first device may comprise: one or more memories storing instructions; one or more transceivers; and one or more processors connected to the one or more memories and the one or more transceivers, wherein the one or more processors execute the instructions to: receive, from a base station, information on an SL resource pool and a first sidelink (SL) discontinuous reception (DRX) configuration; select the SL resource pool based on a transmission profile; transmit, to a second device, first sidelink control information (SCI) for scheduling a physical sidelink shared channel (PSSCH) through a physical sidelink control channel (PSCCH), based on the SL resource pool and the first SL DRX configuration; and transmit, to the second device, second SCI or SL data through the PSSCH based on the SL resource pool and the first SL DRX configuration.

The LTE can efficiently perform SL communication.

### BRIEF DESCRIPTION OF THE DRAWINGS

FIG. 1 is a drawing for describing V2X communication based on NR, compared to V2X communication based on RAT used before NR.
FIG. 2 shows a structure of an NR system, based on an embodiment of the present disclosure.
FIG. 3 shows a radio protocol architecture, based on an embodiment of the present disclosure.
FIG. 4 shows a structure of a radio frame of an NR, based on an embodiment of the present disclosure.
FIG. 5 shows a structure of a slot of an NR frame, based on an embodiment of the present disclosure.
FIG. 6 shows an example of a BWP, based on an embodiment of the present disclosure.
FIG. 7 shows a UE performing V2X or SL communication, based on an embodiment of the present disclosure.
FIG. 8 shows a procedure of performing V2X or SL communication by a LTE based on a transmission mode, based on an embodiment of the present disclosure.
FIG. 9 shows three cast types, based on an embodiment of the present disclosure.
FIG. 10 shows a method in which a UE that has reserved transmission resource(s) informs another UE of the transmission resource(s), based on an embodiment of the present disclosure.
FIG. 11 shows an example of a DRX cycle, based on an embodiment of the present disclosure.
FIG. 12 shows a procedure for performing, by a UE, an SL DRX operation based on SL resource pool configuration information and an SL DRX configuration received from a base station, based on an embodiment of the present disclosure.
FIG. 13 shows a procedure for a transmitting UE to perform SL communication based on an SL DRX configuration and an SL resource pool, based on an embodiment of the present disclosure.
FIG. 14 shows a method for performing, by a first device, SL communication with a second device based on an SL DRX configuration and an SL resource pool, based on an embodiment of the present disclosure.
FIG. 15 shows a method for performing, by a second device, SL communication with a first device based on an SL DRX configuration and an SL resource pool, based on an embodiment of the present disclosure.
FIG. 16 shows a communication system 1, based on an embodiment of the present disclosure.
FIG. 17 shows wireless devices, based on an embodiment of the present disclosure.
FIG. 18 shows a signal process circuit for a transmission signal, based on an embodiment of the present disclosure.
FIG. 19 shows another example of a wireless device, based on an embodiment of the present disclosure.
FIG. 20 shows a hand-held device, based on an embodiment of the present disclosure.
FIG. 21 shows a vehicle or an autonomous vehicle, based on an embodiment of the present disclosure.

### BRIEF DESCRIPTION OF THE DRAWINGS

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

A technical feature described individually in one figure in the present disclosure may be individually implemented, or may be simultaneously implemented.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

For clarity in the description, the following description will mostly focus on LTE-A or 5GNR. However, technical features according to an embodiment of the present disclosure will not be limited only to this.

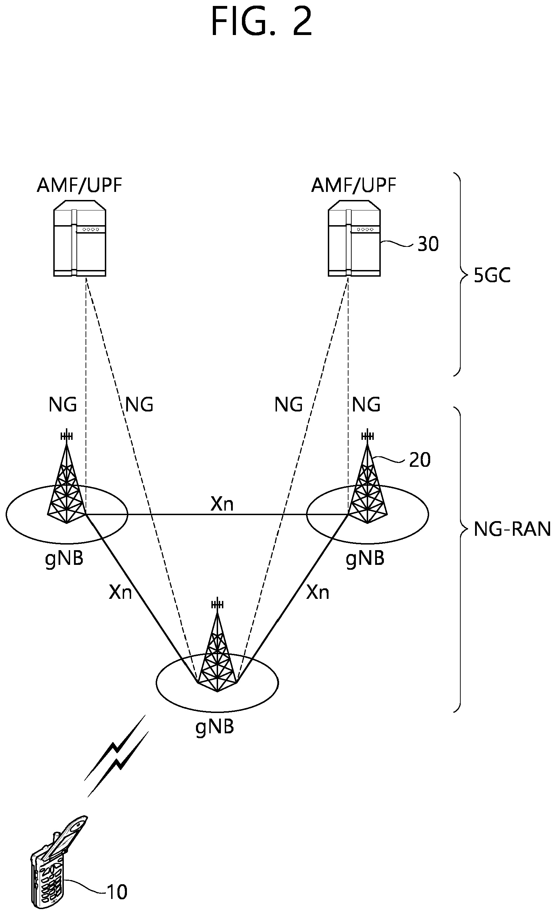

FIG. 2 shows a structure of an NR system, based on an embodiment of the present disclosure. The embodiment of FIG. 2 may be combined with various embodiments of the present disclosure.

Referring to FIG. 2, a next generation-radio access network (NG-RAN) may include a BS 20 providing a LTE 10 with a user plane and control plane protocol termination. For example, the BS 20 may include a next generation-Node B (gNB) and/or an evolved-NodeB (eNB). For example, the UE 10 may be fixed or mobile and may be referred to as other terms, such as a mobile station (MS), a user terminal (UT), a subscriber station (SS), a mobile terminal (MT), wireless device, and so on. For example, the BS may be referred to as a fixed station which communicates with the UE 10 and may be referred to as other terms, such as a base transceiver system (BTS), an access point (AP), and so on.

The embodiment of FIG. 2 exemplifies a case where only the gNB is included. The BSs 20 may be connected to one another via Xn interface. The BS 20 may be connected to one another via 5th generation (5G) core network (5GC) and NG interface. More specifically, the BSs 20 may be connected to an access and mobility management function (AMF) 30 via NG-C interface, and may be connected to a user plane function (UPF) 30 via NG-U interface.

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

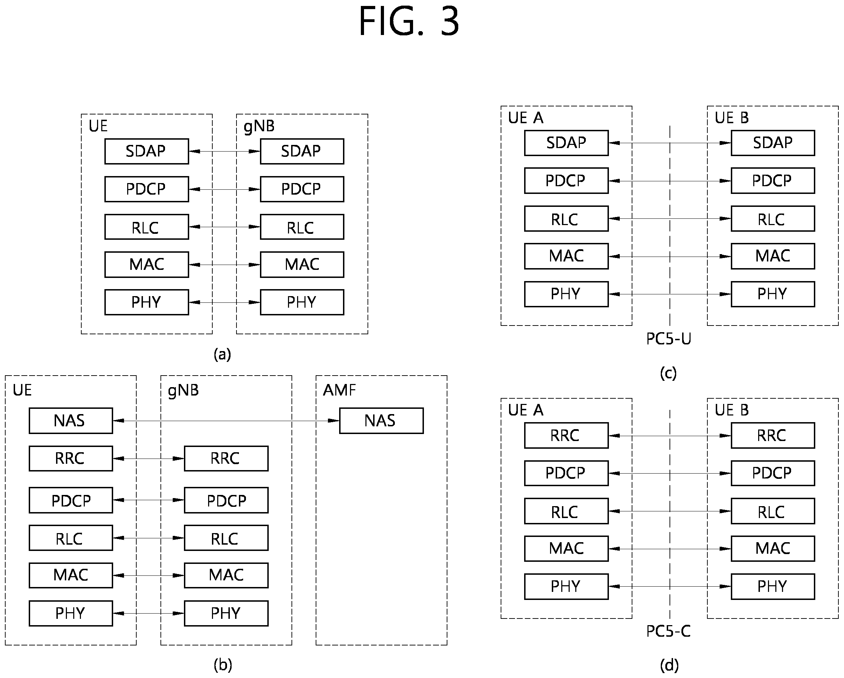

FIG. 3 shows a radio protocol architecture, based on an embodiment of the present disclosure. The embodiment of FIG. 3 may be combined with various embodiments of the present disclosure. Specifically, (a) of FIG. 3 shows a radio protocol stack of a user plane for Uu communication, and (b) of FIG. 3 shows a radio protocol stack of a control plane for Uu communication, (c) of FIG. 3 shows a radio protocol stack of a user plane for SL communication, and (d) of FIG. 3 shows a radio protocol stack of a control plane for SL communication.

Referring to FIG. 3, a physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, i.e., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, i.e., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (i.e., the physical layer or the PHY layer) and the second layer (i.e., a MAC layer, an RLC layer, a packet data convergence protocol (PDCP) layer, and a service data adaptation protocol (SDAP) layer) for data delivery between the LTE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, i.e., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a LTE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

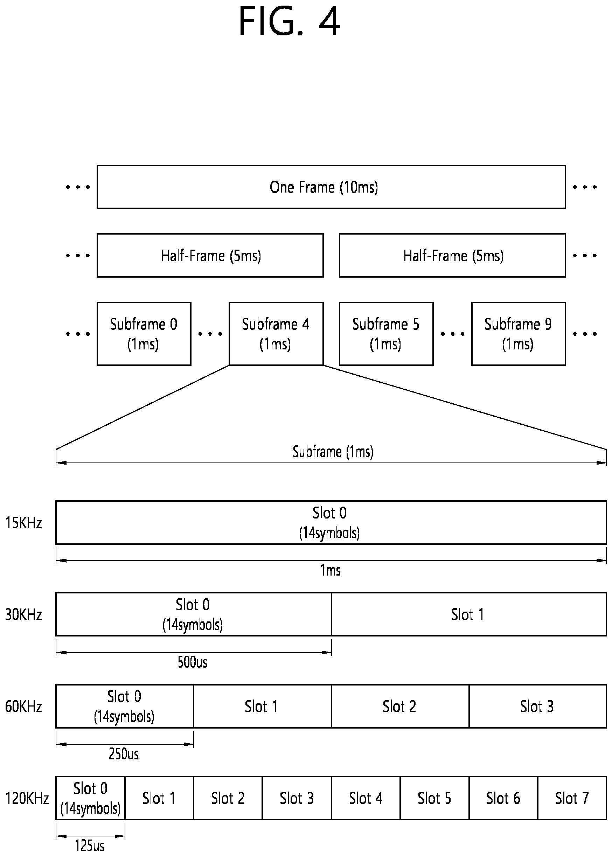

FIG. 4 shows a structure of a radio frame of an NR, based on an embodiment of the present disclosure. The embodiment of FIG. 4 may be combined with various embodiments of the present disclosure.

Referring to FIG. 4, in the NR, a radio frame may be used for performing uplink and downlink transmission. A radio frame has a length of 10ms and may be defined to be configured of two half-frames (HFs). A half-frame may include five 1ms subframes (SFs). A subframe (SF) may be divided into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

Table 1 shown below represents an example of a number of symbols per slot (N^{slot}_{symb}), a number slots per frame (N^{frame,u}ₛₗₒₜ), and a number of slots per subframe (N^{subframe,u}ₛₗₒₜ) based on an SCS configuration (u), in a case where a normal CP is used.

**[Table 1]**

| SCS (15^{∗}2^{u}) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

Table 2 shows an example of a number of symbols per slot, a number of slots per frame, and a number of slots per subframe based on the SCS, in a case where an extended CP is used.

**[Table 2]**

| SCS (15^{∗}2^{u}) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In an NR system, OFDM(A) numerologies (e.g., SCS, CP length, and so on) between multiple cells being integrate to one LTE may be differently configured. Accordingly, a (absolute time) duration (or section) of a time resource (e.g., subframe, slot or TTI) (collectively referred to as a time unit (TU) for simplicity) being configured of the same number of symbols may be differently configured in the integrated cells.

In the NR, multiple numerologies or SCSs for supporting diverse 5G services may be supported. For example, in case an SCS is 15kHz, a wide area of the conventional cellular bands may be supported, and, in case an SCS is 30kHz/60kHz a dense-urban, lower latency, wider carrier bandwidth may be supported. In case the SCS is 60kHz or higher, a bandwidth that is greater than 24.25GHz may be used in order to overcome phase noise.

An NR frequency band may be defined as two different types of frequency ranges. The two different types of frequency ranges may be FR1 and FR2. The values of the frequency ranges may be changed (or varied), and, for example, the two different types of frequency ranges may be as shown below in Table 3. Among the frequency ranges that are used in an NR system, FR1 may mean a "sub 6GHz range", and FR2 may mean an "above 6GHz range" and may also be referred to as a millimeter wave (mmW).

**[Table 3]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed (or varied). For example, as shown below in Table 4, FR1 may include a band within a range of 410MHz to 7125MHz. More specifically, FR1 may include a frequency band of 6GHz (or 5850, 5900, 5925 MHz, and so on) and higher. For example, a frequency band of 6GHz (or 5850, 5900, 5925 MHz, and so on) and higher being included in FR1 mat include an unlicensed band. The unlicensed band may be used for diverse purposes, e.g., the unlicensed band for vehicle-specific communication (e.g., automated driving).

**[Table 4]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

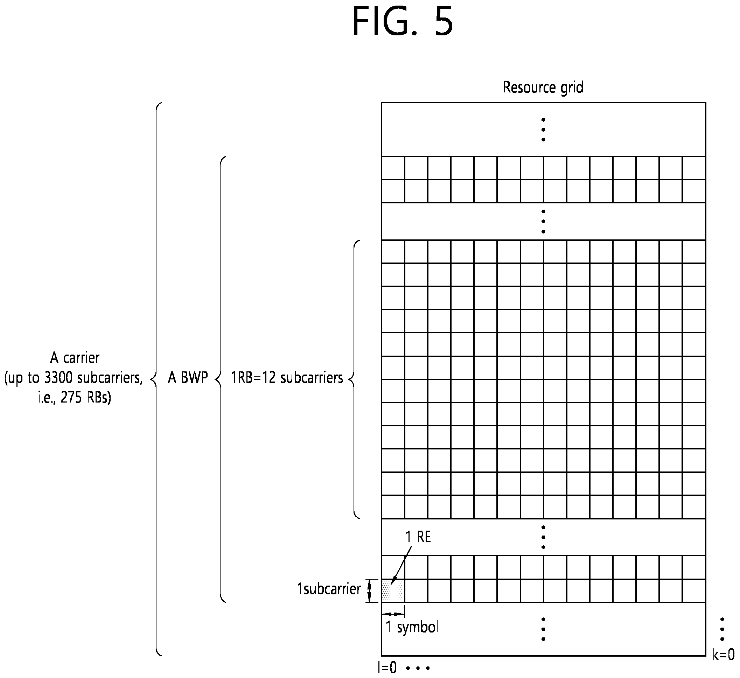

FIG. 5 shows a structure of a slot of an NR frame, based on an embodiment of the present disclosure. The embodiment of FIG. 5 may be combined with various embodiments of the present disclosure.

Referring to FIG. 5, a slot includes a plurality of symbols in a time domain. For example, in case of a normal CP, one slot may include 14 symbols. However, in case of an extended CP, one slot may include 12 symbols. Alternatively, in case of a normal CP, one slot may include 7 symbols. However, in case of an extended CP, one slot may include 6 symbols.

A carrier includes a plurality of subcarriers in a frequency domain. A Resource Block (RB) may be defined as a plurality of consecutive subcarriers (e.g., 12 subcarriers) in the frequency domain. A Bandwidth Part (BWP) may be defined as a plurality of consecutive (Physical) Resource Blocks ((P)RBs) in the frequency domain, and the BWP may correspond to one numerology (e.g., SCS, CP length, and so on). A carrier may include a maximum of N number BWPs (e.g., 5 BWPs). Data communication may be performed via an activated BWP. Each element may be referred to as a Resource Element (RE) within a resource grid and one complex symbol may be mapped to each element.

Hereinafter, a bandwidth part (BWP) and a carrier will be described.

The BWP may be a set of consecutive physical resource blocks (PRBs) in a given numerology. The PRB may be selected from consecutive sub-sets of common resource blocks (CRBs) for the given numerology on a given carrier

For example, the BWP may be at least any one of an active BWP, an initial BWP, and/or a default BWP. For example, the LTE may not monitor downlink radio link quality in a DL BWP other than an active DL BWP on a primary cell (PCell). For example, the UE may not receive PDCCH, physical downlink shared channel (PDSCH), or channel state information - reference signal (CSI-RS) (excluding RRM) outside the active DL BWP. For example, the LTE may not trigger a channel state information (CSI) report for the inactive DL BWP. For example, the LTE may not transmit physical uplink control channel (PUCCH) or physical uplink shared channel (PUSCH) outside an active UL BWP. For example, in a downlink case, the initial BWP may be given as a consecutive RB set for a remaining minimum system information (RMSI) control resource set (CORESET) (configured by physical broadcast channel (PBCH)). For example, in an uplink case, the initial BWP may be given by system information block (SIB) for a random access procedure. For example, the default BWP may be configured by a higher layer. For example, an initial value of the default BWP may be an initial DL BWP. For energy saving, if the LTE fails to detect downlink control information (DCI) during a specific period, the UE may switch the active BWP of the UE to the default BWP.

Meanwhile, the BWP may be defined for SL. The same SL BWP may be used in transmission and reception. For example, a transmitting LTE may transmit an SL channel or an SL signal on a specific BWP, and a receiving UE may receive the SL channel or the SL signal on the specific BWP. In a licensed carrier, the SL BWP may be defined separately from a Uu BWP, and the SL BWP may have configuration signaling separate from the Uu BWP. For example, the LTE may receive a configuration for the SL BWP from the BS/network. For example, the UE may receive a configuration for the Uu BWP from the BS/network. The SL BWP may be (pre-)configured in a carrier with respect to an out-of-coverage NR V2X UE and an RRC_IDLE UE. For the UE in the RRC_CONNECTED mode, at least one SL BWP may be activated in the carrier.

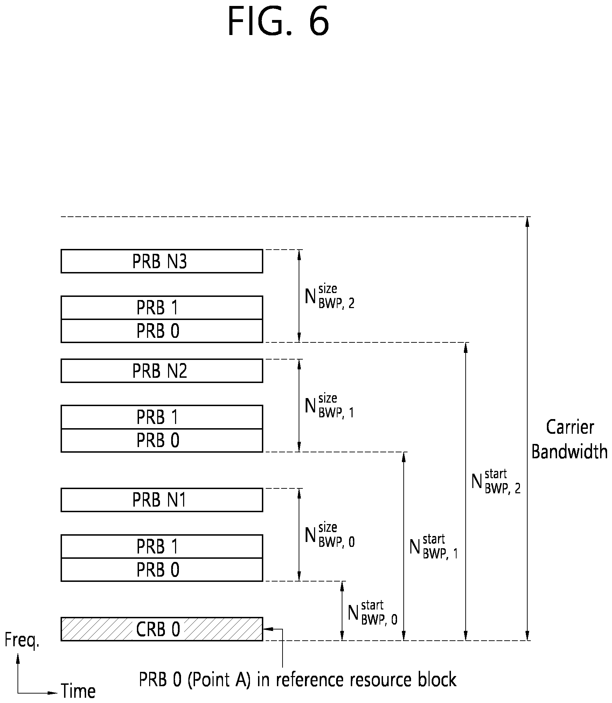

FIG. 6 shows an example of a BWP, based on an embodiment of the present disclosure. The embodiment of FIG. 6 may be combined with various embodiments of the present disclosure. It is assumed in the embodiment of FIG. 6 that the number of BWPs is 3.

Referring to FIG. 6, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

Hereinafter, V2X or SL communication will be described.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a LTE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (LTL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (i.e., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

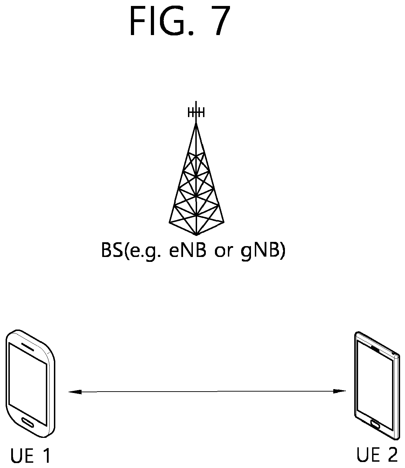

FIG. 7 shows a UE performing V2X or SL communication, based on an embodiment of the present disclosure. The embodiment of FIG. 7 may be combined with various embodiments of the present disclosure.

Referring to FIG. 7, in V2X or SL communication, the term 'UE' may generally imply a UE of a user. However, if a network equipment such as a BS transmits/receives a signal according to a communication scheme between UEs, the BS may also be regarded as a sort of the LTE. For example, a LTE 1 may be a first apparatus 100, and a LTE 2 may be a second apparatus 200.

For example, the UE 1 may select a resource unit corresponding to a specific resource in a resource pool which implies a set of series of resources. In addition, the UE 1 may transmit an SL signal by using the resource unit. For example, a resource pool in which the UE 1 is capable of transmitting a signal may be configured to the UE 2 which is a receiving UE, and the signal of the UE 1 may be detected in the resource pool.

Herein, if the UE 1 is within a connectivity range of the BS, the BS may inform the UE 1 of the resource pool. Otherwise, if the UE 1 is out of the connectivity range of the BS, another UE may inform the UE 1 of the resource pool, or the UE 1 may use a pre-configured resource pool.

In general, the resource pool may be configured in unit of a plurality of resources, and each UE may select a unit of one or a plurality of resources to use it in SL signal transmission thereof.

Hereinafter, resource allocation in SL will be described.

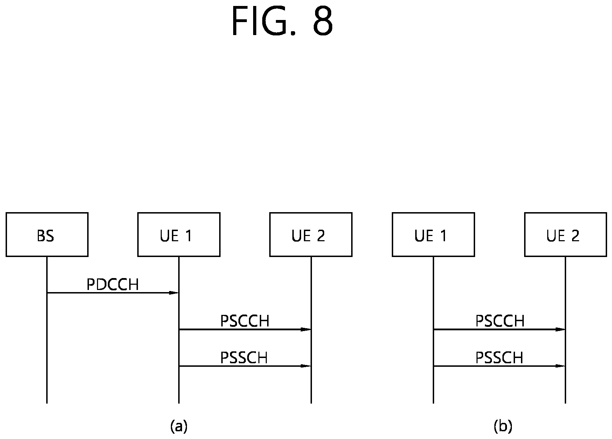

FIG. 8 shows a procedure of performing V2X or SL communication by a LTE based on a transmission mode, based on an embodiment of the present disclosure. The embodiment of FIG. 8 may be combined with various embodiments of the present disclosure. In various embodiments of the present disclosure, the transmission mode may be called a mode or a resource allocation mode. Hereinafter, for convenience of explanation, in LTE, the transmission mode may be called an LTE transmission mode. In NR, the transmission mode may be called an NR resource allocation mode.

For example, (a) of FIG. 8 shows a UE operation related to an LTE transmission mode 1 or an LTE transmission mode 3. Alternatively, for example, (a) of FIG. 8 shows a LTE operation related to an NR resource allocation mode 1. For example, the LTE transmission mode 1 may be applied to general SL communication, and the LTE transmission mode 3 may be applied to V2X communication.

For example, (b) of FIG. 8 shows a UE operation related to an LTE transmission mode 2 or an LTE transmission mode 4. Alternatively, for example, (b) of FIG. 8 shows a LTE operation related to an NR resource allocation mode 2.

Referring to (a) of FIG. 8, in the LTE transmission mode 1, the LTE transmission mode 3, or the NR resource allocation mode 1, a BS may schedule an SL resource to be used by the LTE for SL transmission. For example, the BS may perform resource scheduling to a LTE 1 through a PDCCH (e.g., downlink control information (DCI)) or RRC signaling (e.g., Configured Grant Type 1 or Configured Grant Type 2), and the LTE 1 may perform V2X or SL communication with respect to a UE 2 according to the resource scheduling. For example, the UE 1 may transmit a sidelink control information (SCI) to the UE 2 through a physical sidelink control channel (PSCCH), and thereafter transmit data based on the SCI to the LTE 2 through a physical sidelink shared channel (PSSCH).

Referring to (b) of FIG. 8, in the LTE transmission mode 2, the LTE transmission mode 4, or the NR resource allocation mode 2, the LTE may determine an SL transmission resource within an SL resource configured by a BS/network or a pre-configured SL resource. For example, the configured SL resource or the pre-configured SL resource may be a resource pool. For example, the LTE may autonomously select or schedule a resource for SL transmission. For example, the UE may perform SL communication by autonomously selecting a resource within a configured resource pool. For example, the UE may autonomously select a resource within a selective window by performing a sensing and resource (re)selection procedure. For example, the sensing may be performed in unit of subchannels. In addition, the UE 1 which has autonomously selected the resource within the resource pool may transmit the SCI to the UE 2 through a PSCCH, and thereafter may transmit data based on the SCI to the LTE 2 through a PSSCH.

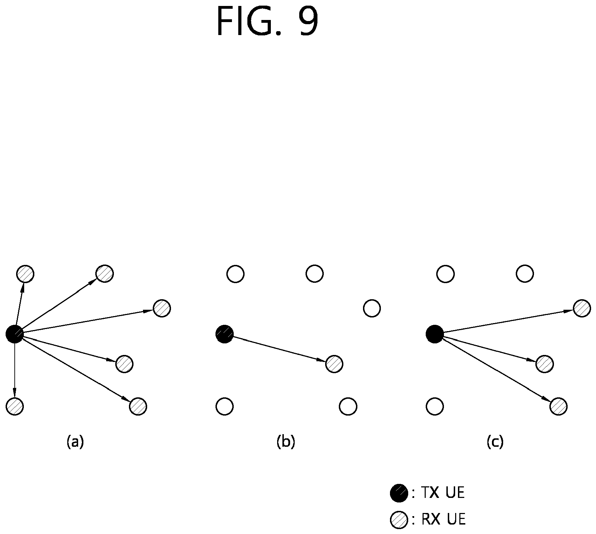

FIG. 9 shows three cast types, based on an embodiment of the present disclosure. The embodiment of FIG. 9 may be combined with various embodiments of the present disclosure. Specifically, (a) of FIG. 9 shows broadcast-type SL communication, (b) of FIG. 9 shows unicast type-SL communication, and (c) of FIG. 9 shows groupcast-type SL communication. In case of the unicast-type SL communication, a UE may perform one-to-one communication with respect to another LTE. In case of the groupcast-type SL transmission, the LTE may perform SL communication with respect to one or more LTEs in a group to which the LTE belongs. In various embodiments of the present disclosure, SL groupcast communication may be replaced with SL multicast communication, SL one-to-many communication, or the like.

Meanwhile, in the present disclosure, for example, a transmitting UE (TX UE) may be a UE which transmits data to a (target) receiving UE (RX UE). For example, the TX UE may be a LTE which performs PSCCH transmission and/or PSSCH transmission. Additionally/alternatively, for example, the TX UE may be a UE which transmits SL CSI-RS(s) and/or a SL CSI report request indicator to the (target) RX LTE. Additionally/alternatively, for example, the TX UE may be a UE which transmits a (control) channel (e.g., PSCCH, PSSCH, etc.) and/or reference signal(s) on the (control) channel (e.g., DM-RS, CSI-RS, etc.), to be used for a SL radio link monitoring (RLM) operation and/or a SL radio link failure (RLF) operation of the (target) RX UE.

Meanwhile, in the present disclosure, for example, a receiving UE (RX UE) may be a UE which transmits SL HARQ feedback to a transmitting UE (TX UE) based on whether decoding of data received from the TX LTE is successful and/or whether detection/decoding of a PSCCH (related to PSSCH scheduling) transmitted by the TX UE is successful. Additionally/alternatively, for example, the RX LTE may be a LTE which performs SL CSI transmission to the TX LTE based on SL CSI-RS(s) and/or a SL CSI report request indicator received from the TX UE. Additionally/alternatively, for example, the RX UE is a UE which transmits a SL (L1) reference signal received power (RSRP) measurement value, to the TX UE, measured based on (pre-defined) reference signal(s) and/or a SL (L1) RSRP report request indicator received from the TX UE. Additionally/alternatively, for example, the RX UE may be a LTE which transmits data of the RX LTE to the TX LTE. Additionally/alternatively, for example, the RX LTE may be a LTE which performs a SL RLM operation and/or a SL RLF operation based on a (pre-configured) (control) channel and/or reference signal(s) on the (control) channel received from the TX UE.

Meanwhile, in the present disclosure, for example, in case the RX UE transmits SL HARQ feedback information for a PSSCH and/or a PSCCH received from the TX UE, the following options or some of the following options may be considered. Herein, for example, the following options or some of the following options may be limitedly applied only if the RX UE successfully decodes/detects a PSCCH scheduling a PSSCH.
(1) groupcast option 1: no acknowledgement (NACK) information may be transmitted to the TX UE only if the RX UE fails to decode/receive the PSSCH received from the TX UE.
(2) groupcast option 2: If the RX UE succeeds in decoding/receiving the PSSCH received from the TX UE, ACK information may be transmitted to the TX UE, and if the RX UE fails to decode/receive the PSSCH, NACK information may be transmitted to the TX UE.

Meanwhile, in the present disclosure, for example, the TX UE may transmit the following information or some of the following information to the RX LTE through SCI(s). Herein, for example, the TX UE may transmit some or all of the following information to the RX LTE through a first SCI and/or a second SCI.
- PSSCH (and/or PSCCH) related resource allocation information (e.g., the location/number of time/frequency resources, resource reservation information (e.g., period))
- SL CSI report request indicator or SL (L1) reference signal received power (RSRP) (and/or SL (L1) reference signal received quality (RSRQ) and/or SL (L1) reference signal strength indicator (RSSI)) report request indicator
- SL CSI transmission indicator (or SL (L1) RSRP (and/or SL (L1) RSRQ and/or SL (L1) RSSI) information transmission indicator) (on a PSSCH)
- Modulation and Coding Scheme (MCS) information
- TX power information
- L1 destination ID information and/or L1 source ID information
- SL HARQ process ID information
- New Data Indicator (NDI) information
- Redundancy Version (RV) information
- (Transmission traffic/packet related) QoS information (e.g., priority information)
- SL CSI-RS transmission indicator or information on the number of antenna ports for (transmitting) SL CSI-RS
- TX UE location information or location (or distance range) information of the target RX UE (for which SL HARQ feedback is requested)
- Reference signal (e.g., DM-RS, etc.) information related to decoding (and/or channel estimation) of data transmitted through a PSSCH. For example, information related to a pattern of (time-frequency) mapping resources of DM-RS(s), RANK information, antenna port index information, information on the number of antenna ports, etc.

Meanwhile, in the present disclosure, for example, since the TX UE may transmit a SCI, a first SCI and/or a second SCI to the RX UE through a PSCCH, the PSCCH may be replaced/substituted with the SCI and/or the first SCI and/or the second SCI. Additionally/alternatively, the SCI may be replaced/substituted with the PSCCH and/or the first SCI and/or the second SCI. Additionally/alternatively, for example, since the TX UE may transmit a second SCI to the RX UE through a PSSCH, the PSSCH may be replaced/substituted with the second SCI.

Meanwhile, in the present disclosure, for example, if SCI configuration fields are divided into two groups in consideration of a (relatively) high SCI payload size, the first SCI including a first SCI configuration field group may be referred to as a 1^{st} SCI, and the second SCI including a second SCI configuration field group may be referred to as a 2^{nd} SCI. Also, for example, the 1^{st} SCI may be transmitted to the receiving LTE through a PSCCH. Also, for example, the 2^{nd} SCI may be transmitted to the receiving UE through a (independent) PSCCH or may be piggybacked and transmitted together with data through a PSSCH.

Meanwhile, in the present disclosure, for example, the term "configure/configured" or the term "define/defined" may refer to (pre)configuration from a base station or a network (through pre-defined signaling (e.g., SIB, MAC, RRC, etc.)) (for each resource pool).

Meanwhile, in the present disclosure, for example, since an RLF may be determined based on out-of-synch (OOS) indicator(s) or in-synch (IS) indicator(s), the RLF may be replaced/substituted with out-of-synch (OOS) indicator(s) or in-synch (IS) indicator(s).

Meanwhile, in the present disclosure, for example, an RB may be replaced/substituted with a subcarrier. Also, in the present disclosure, for example, a packet or a traffic may be replaced/substituted with a TB or a MAC PDU based on a transmission layer.

Meanwhile, in the present disclosure, a CBG may be replaced/substituted with a TB.

Meanwhile, in the present disclosure, for example, a source ID may be replaced/substituted with a destination ID.

Meanwhile, in the present disclosure, for example, an L1 ID may be replaced/substituted with an L2 ID. For example, the L1 ID may be an L1 source ID or an L1 destination ID. For example, the L2 ID may be an L2 source ID or an L2 destination ID.

Meanwhile, in the present disclosure, for example, an operation of the transmitting UE to reserve/select/determine retransmission resource(s) may include: an operation of the transmitting LTE to reserve/select/determine potential retransmission resource(s) for which actual use will be determined based on SL HARQ feedback information received from the receiving UE.

Meanwhile, in the present disclosure, a sub-selection window may be replaced/substituted with a selection window and/or the pre-configured number of resource sets within the selection window, or vice versa.

Meanwhile, in the present disclosure, SL MODE 1 may refer to a resource allocation method or a communication method in which a base station directly schedules SL transmission resource(s) for a TX LTE through pre-defined signaling (e.g., DCI or RRC message). For example, SL MODE 2 may refer to a resource allocation method or a communication method in which a UE independently selects SL transmission resource(s) in a resource pool pre-configured or configured from a base station or a network. For example, a LTE performing SL communication based on SL MODE 1 may be referred to as a MODE 1 LTE or MODE 1 TX UE, and a UE performing SL communication based on SL MODE 2 may be referred to as a MODE 2 UE or MODE 2 TX UE.

Meanwhile, in the present disclosure, for example, a dynamic grant (DG) may be replaced/substituted with a configured grant (CG) and/or a semi-persistent scheduling (SPS) grant, or vice versa. For example, the DG may be replaced/substituted with a combination of the CG and the SPS grant, or vice versa. For example, the CG may include at least one of a configured grant (CG) type 1 and/or a configured grant (CG) type 2. For example, in the CG type 1, a grant may be provided by RRC signaling and may be stored as a configured grant. For example, in the CG type 2, a grant may be provided by a PDCCH, and may be stored or deleted as a configured grant based on L1 signaling indicating activation or deactivation of the grant.

Meanwhile, in the present disclosure, a channel may be replaced/substituted with a signal, or vice versa. For example, transmission/reception of a channel may include transmission/reception of a signal. For example, transmission/reception of a signal may include transmission/reception of a channel. In addition, for example, cast may be replaced/substituted with at least one of unicast, groupcast, and/or broadcast, or vice versa. For example, a cast type may be replaced/substituted with at least one of unicast, groupcast, and/or broadcast, or vice versa.

Meanwhile, in the present disclosure, a resource may be replaced/substituted with a slot or a symbol, or vice versa. For example, the resource may include a slot and/or a symbol.

Meanwhile, in the present disclosure, a priority may be replaced/substituted with at least one of logical channel prioritization (LCP), latency, reliability, minimum required communication range, prose per-packet priority (PPPP), sidelink radio bearer (SLRB), QoS profile, QoS parameter and/or requirement, or vice versa.

Meanwhile, in various embodiments of the present disclosure, the reservation resource and/or the selection resource may be replaced/substituted with a sidelink grant (SL GRANT).

Meanwhile, in various embodiments of the present disclosure, latency may be replaced/substituted with a packet delay budget (PDB).

Meanwhile, in various embodiments of the present disclosure, a message for triggering a report on sidelink channel state information/sidelink channel quality information (hereinafter, SL_CSI information) may be replaced/substituted with a sidelink channel state information reference signal (CSI-RS) reception.

Meanwhile, in the present disclosure, blind retransmission may refer that the TX UE performs retransmission without receiving SL HARQ feedback information from the RX UE. For example, SL HARQ feedback-based retransmission may refer that the TX UE determines whether to perform retransmission based on SL HARQ feedback information received from the RX UE. For example, if the TX UE receives NACK and/or DTX information from the RX UE, the TX UE may perform retransmission to the RX UE.

Meanwhile, in the present disclosure, for example, for convenience of description, a (physical) channel used when a RX LTE transmits at least one of the following information to a TX UE may be referred to as a PSFCH.

### - SL HARQ feedback, SL CSI, SL (L1) RSRP

Meanwhile, in the present disclosure, a Uu channel may include a LTL channel and/or a DL channel. For example, the LTL channel may include a PUSCH, a PUCCH, a sounding reference Signal (SRS), etc. For example, the DL channel may include a PDCCH, a PDSCH, a PSS/SSS, etc. For example, a SL channel may include a PSCCH, a PSSCH, a PSFCH, a PSBCH, a PSSS/SSSS, etc.

Meanwhile, in the present disclosure, sidelink information may include at least one of a sidelink message, a sidelink packet, a sidelink service, sidelink data, sidelink control information, and/or a sidelink transport block (TB). For example, sidelink information may be transmitted through a PSSCH and/or a PSCCH.

Meanwhile, in NR V2X communication or NR sidelink communication, a transmitting UE may reserve/select one or more transmission resources for sidelink transmission (e.g., initial transmission and/or retransmission), and the transmitting LTE may transmit information on the location of the one or more transmission resources to receiving UE(s).

Meanwhile, when performing sidelink communication, a method for a transmitting LTE to reserve or pre-determine transmission resource(s) for receiving UE(s) may be representatively as follows.

For example, the transmitting LTE may perform a reservation of transmission resource(s) based on a chain. Specifically, for example, if the transmitting UE reserves K transmission resources, the transmitting UE may transmit location information for less than K transmission resources to receiving UE(s) through a SCI transmitted to the receiving UE(s) at any (or specific) transmission time or a time resource. That is, for example, the SCI may include location information for less than the K transmission resources. Alternatively, for example, if the transmitting UE reserves K transmission resources related to a specific TB, the transmitting UE may transmit location information for less than K transmission resources to receiving UE(s) through a SCI transmitted to the receiving LTE(s) at any (or specific) transmission time or a time resource. That is, the SCI may include location information for less than the K transmission resources. In this case, for example, it is possible to prevent performance degradation due to an excessive increase in payloads of the SCI, by signaling only the location information for less than K transmission resources to the receiving UE(s) through one SCI transmitted at any (or specific) transmission time or the time resource by the transmitting UE.

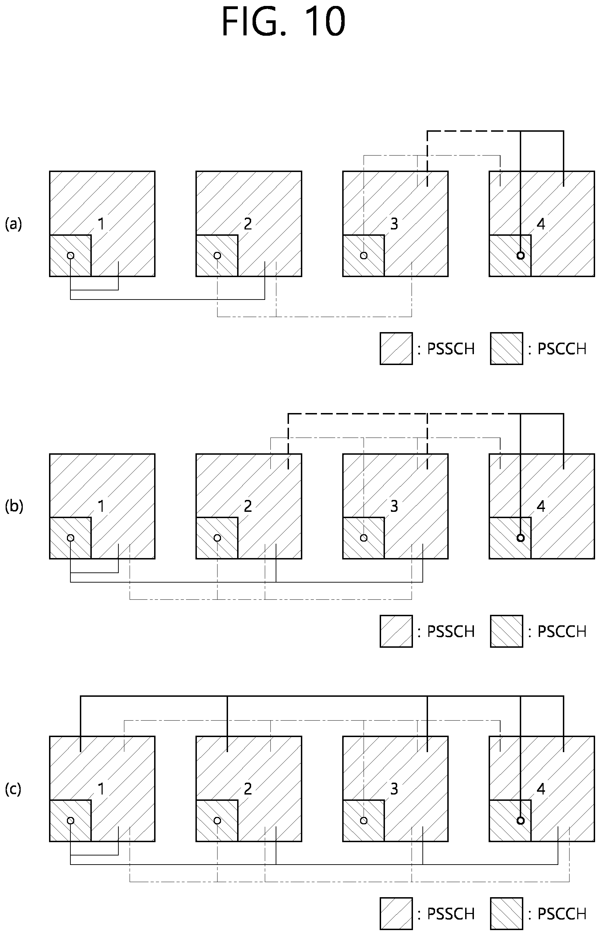

FIG. 10 shows a method in which a UE that has reserved transmission resource(s) informs another UE of the transmission resource(s), based on an embodiment of the present disclosure. The embodiment of FIG. 10 may be combined with various embodiments of the present disclosure.

Specifically, for example, (a) of FIG. 10 shows a method for performing by a transmitting LTE chain-based resource reservation by transmitting/signaling location information of (maximum) 2 transmission resources to receiving UE(s) through one SCI, in the case of a value of K = 4. For example, (b) of FIG. 10 shows a method for performing by a transmitting LTE chain-based resource reservation by transmitting/signaling location information of (maximum) 3 transmission resources to receiving UE(s) through one SCI, in the case of a value of K = 4. For example, referring to (a) and (b) of FIG. 10, the transmitting UE may transmit/signal only location information of the fourth transmission-related resource to the receiving UE(s) through the fourth (or last) transmission-related PSCCH. For example, referring to (a) of FIG. 10, the transmitting UE may transmit/signal to the receiving LTE(s) not only location information of the fourth transmission-related resource but also location information of the third transmission-related resource additionally through the fourth (or last) transmission-related PSCCH. For example, referring to (b) of FIG. 10, the transmitting UE may transmit/signal to the receiving LTE(s) not only location information of the fourth transmission-related resource but also location information of the second transmission-related resource and location information of the third transmission-related resource additionally through the fourth (or last) transmission-related PSCCH. In this case, for example, in (a) and (b) of FIG. 10, if the transmitting UE may transmit/signal to the receiving UE(s) only location information of the fourth transmission-related resource through the fourth (or last) transmission-related PSCCH, the transmitting LTE may set or designate a field/bit of location information of unused or remaining transmission resource(s) to a pre-configured value (e.g., 0). For example, in (a) and (b) of FIG. 10, if the transmitting LTE may transmit/signal to the receiving LTE(s) only location information of the fourth transmission-related resource through the fourth (or last) transmission-related PSCCH, the transmitting LTE may be set or designate a field/bit of location information of unused or remaining transmission resource(s) to a pre-configured status/bit value indicating/representing the last transmission (among 4 transmissions).

Meanwhile, for example, the transmitting LTE may perform a reservation of transmission resource(s) based on a block. Specifically, for example, if the transmitting UE reserves K transmission resources, the transmitting UE may transmit location information for K transmission resources to receiving UE(s) through a SCI transmitted to the receiving UE(s) at any (or specific) transmission time or a time resource. That is, the SCI may include location information for K transmission resources. For example, if the transmitting UE reserves K transmission resources related to a specific TB, the transmitting LTE may transmit location information for K transmission resources to receiving UE(s) through a SCI transmitted to the receiving UE(s) at any (or specific) transmission time or a time resource. That is, the SCI may include location information for K transmission resources. For example, (c) of FIG. 10 shows a method for performing by the transmitting LTE block-based resource reservation, by signaling location information of 4 transmission resources to receiving UE(s) through one SCI, in the case of a value of K = 4.

Hereinafter, as a method for implementing LTE power saving, discontinuous reception (DRX) will be described.

The procedure of the UE related to the DRX may be summarized as Table 5.

**[Table 5]**

| | Type of signals | UE procedure |
|---|---|---|
| Step 1 | RRC signalling (MAC-CellGroupConfig) | - Receive DRX configuration information |
| Step 2 | MAC CE ((Long) DRX command MAC CE) | - Receive DRX command |
| Step 3 | | - Monitor a PDCCH during an on-duration of a DRX cycle |

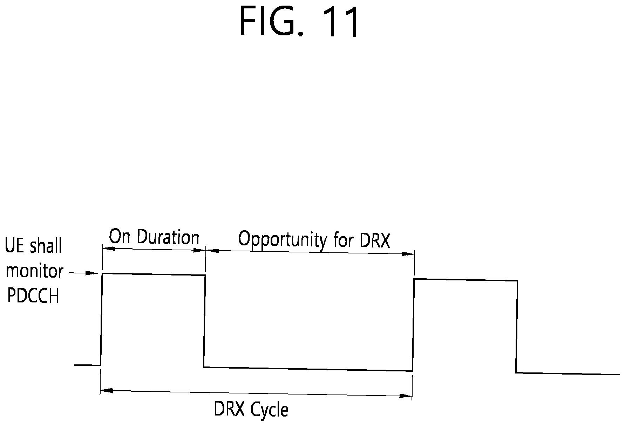

FIG. 11 shows an example of a DRX cycle, based on an embodiment of the present disclosure. Referring to FIG. 11, the LTE uses discontinuous reception (DRX) in an RRC_IDLE state and an RRC_INACTIVE state in order to reduce power consumption. If the DRX is configured, the LTE performs a DRX operation according to DRX configuration information. The UE operating as the DRX repeatedly turns its reception performance ON and OFF.

For example, if the DRX is configured, the UE attempts to receive a PDCCH, which is a downlink channel, only in a predetermined time period, and does not attempt to receive a PDCCH in the remaining time period. The time period during which the UE should attempt to receive the PDCCH is referred to as an on-duration, and the on-duration is defined once per DRX cycle.

The LTE may receive DRX configuration information from the gNB through RRC signaling and operate as DRX through a reception of the (long) DRX command MAC CE.

The DRX configuration information may be included in *MAC-CellGroupConfig.* The *MAC-CellGroupConfig* IE is used to configure MAC parameters for a cell group, including DRX.

The DRX Command MAC CE or the long DRX Command MAC CE is identified by a MAC PDU subheader with logical channel ID (LCID). It has a fixed size with zero bits.

Table 6 shows an example of values of LCID for DL-SCH.

**[Table 6]**

| Index | LCID values |
|---|---|
| 111011 | Long DRX Command |
| 111100 | DRX Command |

The PDCCH monitoring operation of the UE is controlled by DRX and bandwidth adaptation (BA). Meanwhile, If DRX is configured, the LTE does not have to continuously monitor a PDCCH. Meanwhile, DRX is characterized by the following. - On-duration: duration that the UE waits for, after waking up, to receive a PDCCH. If the UE successfully decodes a PDCCH, the UE stays awake and starts an inactivity timer.
- Inactivity timer: duration that the LTE waits to successfully decode a PDCCH, from the last successful decoding of a PDCCH, failing which it may go back to sleep. The UE shall restart the inactivity timer after a single successful decoding of a PDCCH for the first transmission only (i.e., not for retransmissions).
- Retransmission timer: duration until a retransmission may be expected;
- Cycle: specifies the periodic repetition of the on-duration followed by a possible period of inactivity.

For example, the DRX described above can be applied to sidelink communication.

Next, DRX described in the MAC layer will be described. The MAC entity used below may be expressed as a UE or a MAC entity of the UE.

The MAC entity may be configured by RRC with a DRX functionality that controls the UE's PDCCH monitoring activity for the MAC entity's C-RNTI, CS-RNTI, TPC-PUCCH-RNTI, TPC-PUSCH-RNTI, and TPC-SRS-RNTI. When using DRX operation, the MAC entity shall also monitor a PDCCH. When in RRC_CONNECTED, if DRX is configured, the MAC entity may monitor a PDCCH discontinuously using the DRX operation. Otherwise, the MAC entity shall monitor a PDCCH continuously.

RRC controls DRX operation by configuring parameters related to DRX configuration information.

If a DRX cycle is configured, an active time includes the time while:
- *drx-onDurationTimer* or *drx-InactivityTimer* or *drx-RetransmissionTimerDL* or *drx-RetransmissionTimerUL* or *ra-ContentionResolutionTimer* is running; or
- a scheduling request is sent on a PUCCH and is pending; or
- a PDCCH indicating a new transmission addressed to the C-RNTI of the MAC entity has not been received after successful reception of a random access response for the random access preamble not selected by the MAC entity among the contention-based random access preamble.

If DRX is configured, the MAC entity shall:
1> if a MAC PDU is transmitted in a configured uplink grant:
   2> start the *drx-HARQ-RTT-TimerUL* for the corresponding HARQ process immediately after the first repetition of the corresponding PUSCH transmission;
   2> stop the *drx-RetransmissionTimerUL* for the corresponding HARQ process.
1> if a *drx-HARQ-RTT-TimerDL* expires:
   2> if the data of the corresponding HARQ process was not successfully decoded:
   3> start the *drx-RetransmissionTimerDL* for the corresponding HARQ process.
1> if a *drx-HARQ-RTT-TimerUL* expires:
   2> start the *drx-RetransmissionTimerUL* for the corresponding HARQ process.
1> if a DRX Command MAC CE or a Long DRX Command MAC CE is received:
   2> stop *drx-onDurationTimer;*
   2> stop *drx InactivityTimer.*
1> if *drx-InactivityTimer* expires or a DRX Command MAC CE is received:
   2> if the Short DRX cycle is configured:
      3> start or restart *drx-ShortCycleTimer;*
      3> use the Short DRX Cycle.
   2> else:
      3> use the Long DRX cycle.
1> if *drx-ShortCycleTimer* expires:
   2> use the Long DRX cycle.
1> if a Long DRX Command MAC CE is received:
   2> stop *drx-ShortCycleTimer;*
   2> use the Long DRX cycle.
1> if the Short DRX Cycle is used, and [(SFN × 10) + subframe number] modulo *(drx-ShortCycle*) = (*drx-StartOffset*) modulo (*drx-ShortCycle*); or
1> if the Long DRX Cycle is used, and [(SFN × 10) + subframe number] modulo *(drx-LongCycle*) = *drx-StartOffset:*
   2> if *drx-SlotOffset* is configured:
      3> start *drx-onDurationTimer* after *drx-SlotOffset.*
   2> else:
      3> start *drx-onDurationTimer.*
1> if the MAC entity is in Active Time:
   2> monitor the PDCCH;
   2> if the PDCCH indicates a DL transmission or if a DL assignment has been configured:
      3> start the *drx-HARQ-RTT-TimerDL* for the corresponding HARQ process immediately after the corresponding PUCCH transmission;
      3> stop the *drx-RetransmissionTimerDL* for the corresponding HARQ process.
   2> if the PDCCH indicates a LTL transmission:
      3> start the *drx-HARQ-RTT-TimerUL* for the corresponding HARQ process immediately after the first repetition of the corresponding PUSCH transmission;
      3> stop the *drx-RetransmissionTimerUL* for the corresponding HARQ process.
   2> if the PDCCH indicates a new transmission (DL or LTL):
      3> start or restart *drx-InactivityTimer.*
1> else (i.e., not part of the Active Time):
   2> not transmit type-0-triggered SRS.
1> if CQI masking (*cqi-Mask*) is setup by upper layers:
   2> if *drx-onDurationTimer* is not running:
   3> not report CSI on PUCCH.
1> else:
   2> if the MAC entity is not in Active Time:
   3> not report CSI on PUCCH.

Regardless of whether the MAC entity is monitoring PDCCH or not, the MAC entity transmits HARQ feedback and type-1-triggered SRS when such is expected.

The MAC entity needs not to monitor the PDCCH if it is not a complete PDCCH occasion (e.g., the Active Time starts or expires in the middle of a PDCCH occasion).

Hereinafter, DRX for paging will be described.

The LTE may use DRX in the RRC_IDLE state and the RRC_INACTIVE state to reduce power consumption. The UE may monitor one paging occasion PO per DRX cycle and one PO may be composed of a plurality of time slots (e.g., subframes or OFDM symbols) in which paging DCI may be transmitted. In multi-beam operation, the length of one PO is one cycle of beam sweeping, and the UE may assume that the same paging message is repeated in all beams of a sweeping pattern. The paging message is the same in paging initiated by RAN and paging initiated by CN.

One paging frame (PF) is one radio frame and may include one or a plurality of POs.

When the UE receives RAN paging, an RRC connection resuming procedure starts. If the UE receives paging initiated by CN in the RRC_INACTIVE state, the UE transitions to the RRC_IDLE state and informs an NAS of it.

Meanwhile, in sidelink communication, NR V2X of Release 16 does not support the power saving operation of the UE, and the power saving operation of the UE (e.g., pedestrian UE) can be supported from NR V2X of Release 17.

In addition, for example, referring to Table 7 below, a sidelink DRX configuration may be transferred from a V2X layer to an access stratum (AS) layer. In this case, for example, the sidelink DRX configuration transferred from the V2X layer may not be aligned with a resource pool configured from the base station to the UE. For example, if a sidelink DRX onduration of the sidelink DRX configuration transferred from the V2X layer (e.g., the duration in which the LTE can perform sidelink transmission/reception in an awake state) is out of a resource domain of the resource pool configured from the base station to the UE, a problem may arise in which the LTE cannot perform sidelink transmission and sidelink reception.

**[Table 7]**

| TR 23.776 |
|---|
| Editor's note: What are included in the SL DRX configuration generated in V2X layer when: |
| 1) it generates the SL DRX configuration, how does V2X layer understand the TX/RX resource pool adopted in the access stratum; Note that a UE can only transmit or receive in a certain resource pool, while the V2X layer could configure the UE to be awake outside such resource pool, which makes it useless. |

Therefore, in various embodiments of the present disclosure, a method to ensure that a sidelink (SL) DRX configuration (e.g., SL DRX on-duration, SL DRX off-duration, SL DRX operation timer value, etc.) and a resource pool used by the UE in NR V2X communication are well aligned is provided such that UEs can efficiently transmit/receive SL data. In the present disclosure, 'when/if ~~' may be replaced with 'based on ∼∼'.

Based on an embodiment of the present disclosure, when a base station configures a sidelink resource pool and transfers the sidelink resource pool to a LTE, the base station may transfer candidate SL DRX configuration(s) that can be used in the sidelink resource pool to the LTE together. Also, for example, the base station may configure a sidelink resource pool for each sidelink service. That is, for example, the base station may configure a sidelink resource pool mapped to a service supporting sidelink DRX or a sidelink resource pool mapped to a service not supporting sidelink DRX.

For example, if an SL DRX configuration (e.g., SL DRX on-duration, SL DRX off-duration) transmitted from a higher layer (V2X layer) of the UE to an AS layer is out of the range of the sidelink resource pool configured from the base station or partially overlapped with the range of the sidelink resource pool configured from the base station, the LTE may not be able to use the SL DRX configuration (e.g., SL DRX on-duration, SL DRX off-duration) for SL DRX operation (operation of transitioning from sleep mode to awake mode at the start of the on-duration period and performing sidelink communication). Therefore, in the present disclosure, it is proposed to transfer "candidate SL DRX configuration(s)" that can be used together with the sidelink resource pool configured by the base station, when the base station configures the sidelink resource pool and transfers the sidelink resource pool to the LTE through a dedicated RRC message.

For example, the SL DRX configuration (or the SL DRX pattern (SL DRX on-duration, SL DRX off-duration)) generated by the V2X layer of the UE may be a configuration generated by the V2X layer based on QoS requirements (e.g., packet delay budget) of a V2X service generated by an application layer of the UE. In addition, for example, the base station may have packet delay budget (PDB) information mapped for each V2X service. That is, for example, the base station may configure an SL DRX configuration mapped for each QoS requirement (e.g., PDB) of a V2X service. Therefore, when the base station configures an SL resource pool and transmits an SL resource pool configuration to the UE through a dedicated RRC message, the base station may include an SL DRX configuration in the SL resource pool configuration in which an SL DRX on-duration period of the SL DRX configuration mapped with QoS requirements (e.g., PDB) of a V2X service overlaps with a resource domain of the resource pool among SL resource pools, and the base station may transfer the SL resource pool configuration including the SL DRX configuration to the LTE. Through this, the LTE can perform SL DRX operation and reception and transmission of SL data, by receiving the SL resource pool configuration from the base station as well as the SL DRX configuration in which the resource domain of the SL resource pool and the SL DRX on-duration period overlap. That is, for example, the LTE can receive SL data (using the SL RX resource pool) or transmit SL data (using the SL TX resource pool) in the SL DRX on-duration period by using the SL resource pool configured by the base station.

In addition, for example, in the present disclosure, when "candidate SL DRX configuration" list information associated with an SL resource pool is included in SL resource pool configuration information, at least one of PDB, a PC5 QoS Flow Identifier (PFI), a PC5 QoS Identifier (PQI), a transmission (Tx) profile (information representing a mapping relationship between a sidelink service and a sidelink DRX operation: that is, the Tx profile for the corresponding sidelink service may represent whether or not the corresponding sidelink service should support the SL DRX operation), a QoS profile (a bundle of information representing requirements of the sidelink service), an L2 Destination ID, or a service ID representing QoS requirements of a V2X service associated with the SL DRX configuration may be included in the SL DRX configuration and transferred to the UE. Through this, if the UE receives "candidate SL DRX configurations" associated with an SL resource pool, the UE may select an SL DRX configuration that satisfies QoS requirements (PQI, PFI or PDB) of its V2X service, and the UE may use the selected SL DRX configuration for the SL DRX operation. At least one of a service ID, an L2 Destination ID, a QoS Profile, a Tx Profile, a PC5 QoS Identifier (PQI), a PC5 QoS Flow Identifier (PFI), or PDB is not included in the SL DRX configuration, but at least one of a service ID, an L2 Destination ID, a QoS Profile, a Tx Profile, a PC5 QoS Identifier (PQI), a PC5 QoS Flow Identifier (PFI), or PDB may be transferred to the LTE by being included in SL resource pool configuration information associated with the SL DRX configuration.

The present disclosure can solve the following problems of the prior art. For example, an SL DRX configuration used in sidelink groupcast/broadcast may be configured for each QoS profile (PQI) associated with each sidelink groupcast/broadcast service. For example, if an SL DRX configuration (e.g., SL DRX on-duration timer) configured for each QoS profile (PQI) associated with each sidelink groupcast/broadcast service is not included in an SL resource pool (Tx pool and Rx (reception) pool) pre-configured or configured by the base station through dedicated RRC, there may be a problem that the configured SL DRX configuration cannot be used. Therefore, in order to solve this conventional problem, based on various embodiments of the present disclosure, an SL resource pool mapped for each QoS profile, Tx profile, L2 destination ID or pair of L2 source and destination IDs associated with a sidelink service may be configured. Or, for example, based on various embodiments of the present disclosure, an SL resource pool that is linked with an SL DRX configuration mapped for each QoS profile, Tx profile, L2 destination ID or pair of L2 source and destination IDs associated with a sidelink service may be configured.

In addition, based on various embodiments of the present disclosure, a TX UE may select a sidelink Tx pool for SL DRX operation as follows. For example, an RX UE may select a sidelink Rx pool for SL DRX operation.

For example, the base station may separately configure a sidelink resource pool mapped to a service supporting sidelink DRX and a sidelink resource pool mapped to a service not supporting sidelink DRX to the UE.

For example, if available SL data is generated by a higher layer (e.g., V2X layer), the higher layer may generate a Tx profile indicating whether a service (e.g., an L2 Destination ID or a pair of L2 source ID and L2 destination ID) associated with available SL data is a service that should support SL DRX or a service that does not need to support SL DRX, and the higher layer may transfer the TX profile to an AS layer. For example, the AS layer may select a Tx pool to be used, based on the Tx profile information received from the higher layer.

For example, if the TX UE is instructed that a service (e.g., an L2 destination ID or a pair of L2 source ID and L2 destination ID) included in a Tx profile transferred from the higher layer is a service that supports the SL DRX operation, the TX UE may select, as a Tx pool, a resource pool supporting the sidelink DRX operation, from among a plurality of sidelink resource pools configured by the base station for sidelink transmission. For example, if the TX UE is instructed that a service (e.g., an L2 destination ID or a pair of L2 source ID and L2 destination ID) included in a Tx profile transferred from the higher layer is a service that does not support the SL DRX operation, the TX LTE may select, as a Tx pool, a resource pool that does not support the sidelink DRX operation, from among a plurality of sidelink resource pools configured by the base station for sidelink transmission.

In addition, for example, if the RX UE is instructed that a service (e.g., an L2 destination ID or a pair of L2 source ID and L2 destination ID) included in a Tx profile for the sidelink service of interest of the RX UE transferred from the higher layer is a service that supports the SL DRX operation, the RX LTE may select, as an Rx pool, a resource pool supporting the sidelink DRX operation, from among a plurality of sidelink resource pools configured by the base station for sidelink transmission. For example, if the RX UE is instructed that a service (e.g., an L2 destination ID or a pair of L2 source ID and L2 destination ID) of interest of the Rx UE included in a Tx profile transferred from the higher layer is a service that does not support the SL DRX operation, the RX LTE may select, as an Rx pool, a resource pool that does not support the sidelink DRX operation, from among a plurality of sidelink resource pools configured by the base station for sidelink transmission.

Tables 8 to 11 show an embodiment (ASN. 1 coding embodiment) of configuring SL DRX configuration(s) that can be used together with an SL resource pool when the base station configures the SL resource pool for the UE. For example, the following information elements and names of information contained therein may be exemplary. For example, information having similar names that are recognized as substantially the same by those skilled in the art may be included in the scope of the present embodiment.

For example, the base station may include one sidelink DRX configuration or a plurality of SL DRX configurations in the SL resource pool. For example, if a plurality of SL DRX configurations are included in the SL resource pool, the LTE may select and use one of the plurality of SL DRX configurations.

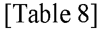

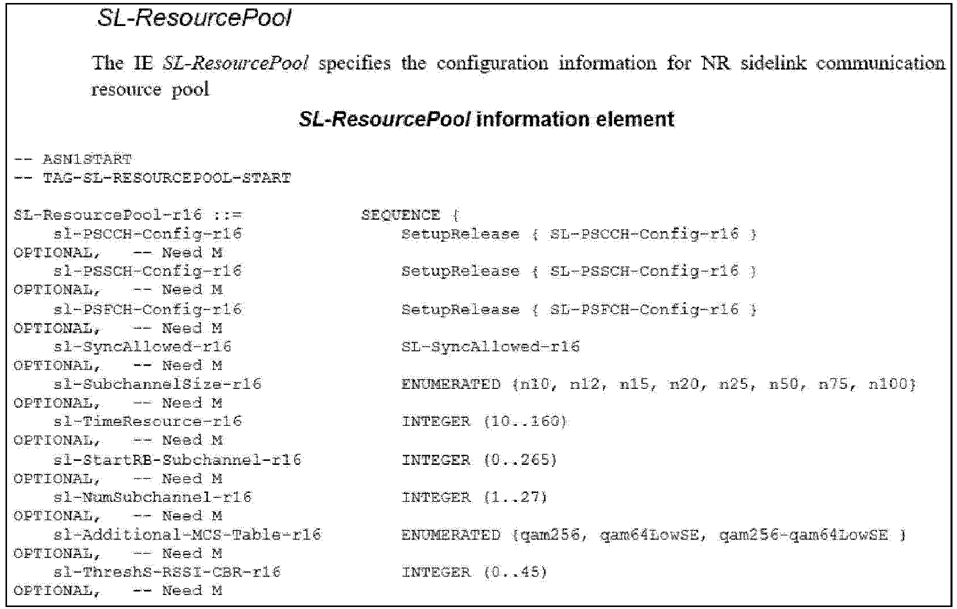

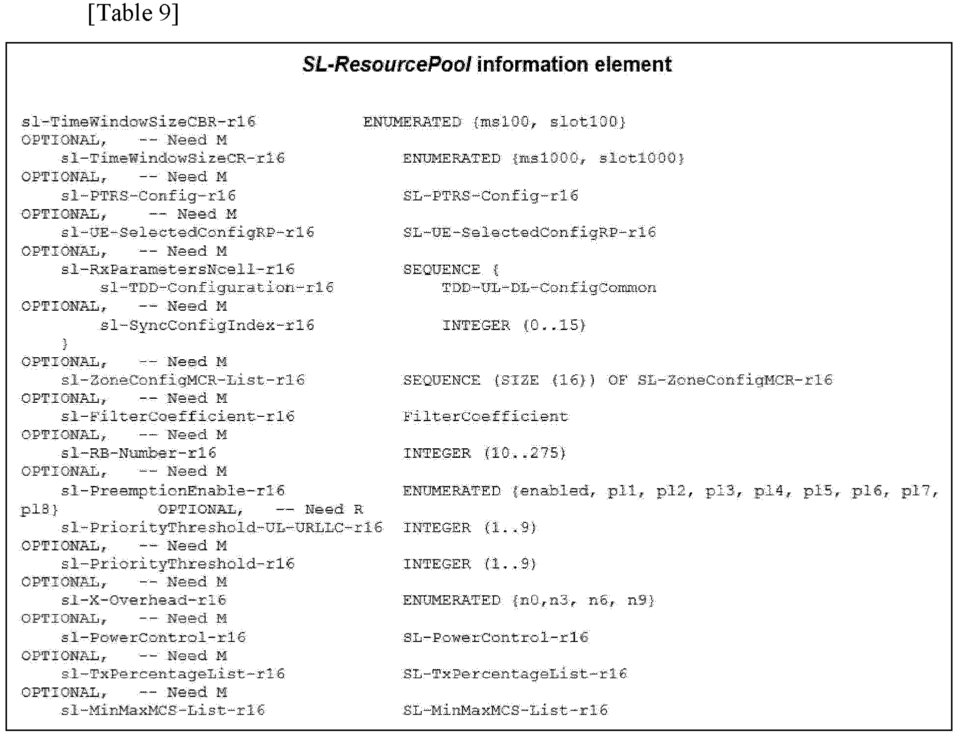

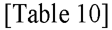

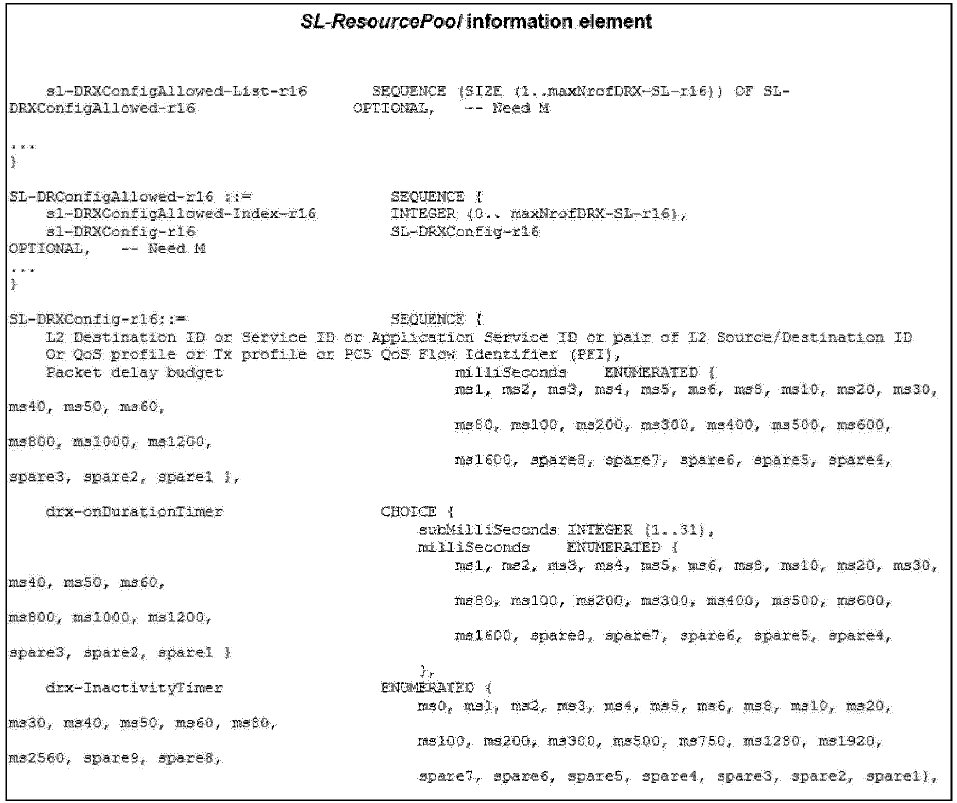

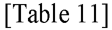

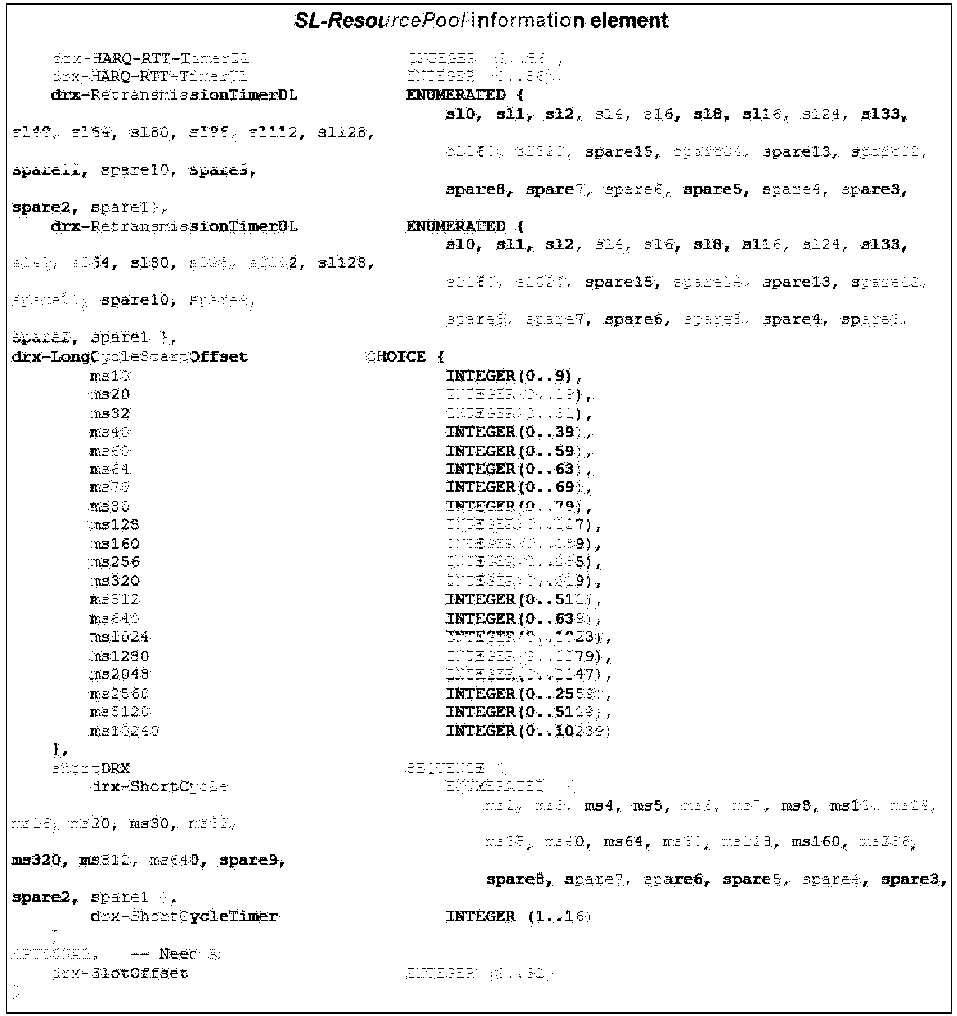

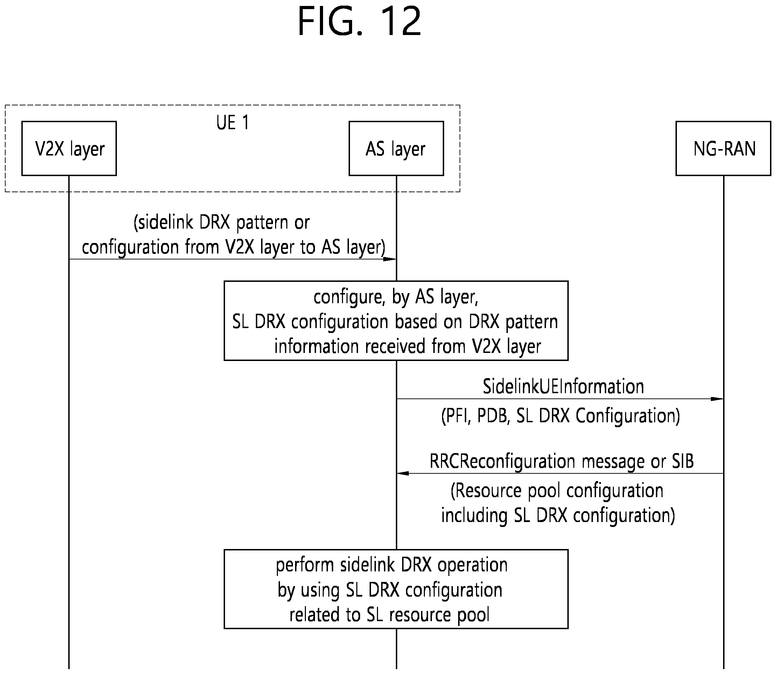

FIG. 12 shows a procedure for performing, by a UE, an SL DRX operation based on SL resource pool configuration information and an SL DRX configuration received from a base station, based on an embodiment of the present disclosure. The embodiment of FIG. 12 may be combined with various embodiments of the present disclosure.

For example, in the embodiment of FIG. 12, the base station may include an SL DRX configuration (e.g., SL DRX on-duration, SL DRX off-duration) in SL resource pool configuration information and transmit it to the LTE, and the LTE may receive SL resource pool configuration information. In addition, the LTE may perform the SL DRX operation by applying the SL DRX configuration included in the SL resource pool configuration information.

In step 1, a V2X layer of the UE may generate sidelink DRX pattern (e.g., SL DRX cycle, SL DRX on-duration) information for the sidelink DRX operation of the UE, based on QoS requirements (e.g., packet delay budget) of the V2X service generated by an application layer. For example, the V2X layer of the LTE may transfer the SL DRX pattern information to an AS layer. Or, for example, the V2X layer of the LTE may generate an SL DRX configuration based on the SL DRX pattern information and transfer the SL DRX configuration to the AS layer.

For example, the SL DRX configuration may include one or more information listed below.

For example, *SL drx-onDurationTimer* may be information for the duration at the beginning of a DRX cycle. For example, the duration at the beginning of the DRX cycle may be information for the duration in which the LTE operates in an active mode to transmit or receive sidelink data.

For example, *SL drx-SlotOffset* may be information for the delay before starting the *drx-onDurationTimer.*

For example, *SL drx-InactivityTimer* may be information for the duration after the PSCCH occasion in which a PSCCH indicates a new sidelink transmission and reception for the MAC entity. For example, if the transmitting LTE indicates transmission of a PSSCH through a PSCCH, the transmitting UE may transmit the PSSCH to the receiving UE, by operating in an active mode while *SL drx-InactivityTimer* is running. In addition, for example, if the receiving LTE is instructed that the transmitting LTE transmits a PSSCH through PSCCH reception, the receiving UE may receive the PSSCH from the transmitting UE, by operating in an active mode while *SL drx-InactivityTimer* is running.

For example, *SL drx-RetransmissionTimer* may be information for the maximum duration until a retransmission is received. For example, *SL drx-RetransmissionTimer* may be configured per HARQ process.

For example, *SL drx-LongCycleStartOffset* may be information for the long DRX cycle and *drx-StartOffset* which defines the subframe where the long and short DRX cycle starts.

For example, *SL drx-ShortCycle* may be information for the short DRX cycle. For example, *SL drx-ShortCycle* may be optional information.

For example, *SL drx-ShortCycleTimer* may be information for the duration the UE shall follow the short DRX cycle. For example, *SL drx-ShortCycleTimer* may be optional information.

For example, *SL drx-HARQ-RTT-Timer* may be information for the minimum duration before an assignment for HARQ retransmission is expected by the MAC entity. For example, *SL drx-HARQ-RTT-Timer* may be configured per HARQ process.

In step 2, the AS layer of the UE may generate an SL DRX configuration based on the SL DRX pattern information ("SL DRX cycle and SL DRX on-duration length" or "SL DRX on-duration length and SL DRX off-duration length") received from the V2X layer. For example, the AS layer of the LTE may use the SL DRX configuration for the SL DRX operation. Or, for example, the AS layer of the UE may perform the SL DRX operation by using the SL DRX configuration information received from the V2X layer.

In step 3, the LTE may transfer QoS requirement information (at least one of an L2 destination ID, a QoS profile, a PQI, a PFI or PDB) or a Tx profile and the SL DRX configuration for the UE's V2X service to the base station. For example, the UE may transmit the QoS requirement information and the SL DRX configuration to the base station through a SidelinkUEinformation message. Herein, for example, the UE may transmit QoS requirement information for the service included in the Tx profile to the base station.

In step 4, the base station may generate an SL resource pool based on the QoS requirement information (at least one of an L2 destination ID, a QoS profile, a PQI, a PFI, or PDB) or the Tx profile and the SL DRX configuration for the V2X service transferred from the LTE. In addition, for example, the base station may reconfigure the SL DRX configuration associated with the SL resource pool and transfer the reconfigured SL DRX configuration to the UE. For example, the base station may transmit at least one of information on the SL resource pool or information on the SL DRX configuration to the LTE through an RRCReconfiguration message or a system information block (SIB). For example, information on the SL resource pool may include information on the SL DRX configuration.

For example, in steps 1, 2, and 3, the process of transmitting the SL DRX configuration from the LTE to the base station may be omitted. That is, for example, the base station may generate an SL resource pool, based on QoS requirement information (at least one of an L2 destination ID, a QoS profile, a PQI, a PFI or PDB) or a Tx profile for a V2X service of the UE. For example, the base station may configure an SL DRX configuration associated with the SL resource pool and transfer the SL DRX configuration to the UE.

In step 5, the UE may perform the SL DRX operation and sidelink transmission/reception by using the reconfigured SL resource pool and the SL DRX configuration associated with the SL resource pool received from the base station.

Based on various embodiments of the present disclosure, an SL DRX configuration and an SL resource pool mapped for each QoS requirement (L2 destination ID, QoS profile, Tx profile, PQI, PFI or PDB) that should satisfy a sidelink service may be defined, and the base station may configure the SL DRX configuration and the SL resource pool mapped for each QoS requirement that should satisfy the sidelink service to the UE. That is, for example, the LTE may perform sidelink communication by using an SL DRX configuration and an SL resource pool mapped to a QoS profile or a service of interest of the UE.

Based on an embodiment of the present disclosure, when sidelink service data is transferred from a higher layer (e.g., V2X layer) to an AS layer, an SL resource pool and/or an SL DRX configuration mapped to a QoS profile may be indicated and transferred to the AS layer. For example, when sidelink service data is transferred from a higher layer (e.g., V2X layer) to an AS layer, an SL resource pool and/or an SL DRX configuration mapped to a Tx profile may be indicated and transferred to the AS layer. For example, the UE may check the QoS profile/Tx profile of the service of interest of the UE, and the UE may perform sidelink communication by using the SL resource pool and the SL DRX configuration mapped to the QoS profile/Tx profile.

Based on an embodiment of the present disclosure, the base station may generate the SL resource pool based on QoS requirements (L2 destination ID, PQI, PFI, PDB) of the V2X service of the UE. In addition, for example, the base station may generate and transmit the SL DRX configuration associated with the sidelink resource pool to the UE. Through this, the UE may efficiently perform SL communication (transmission and reception) while performing the SL DRX operation.

Various embodiments of the present disclosure may solve a problem of loss due to interruption occurring during Uu BWP switching.

In addition, for example, various embodiments of the present disclosure solve a problem of loss due to interruption occurring during SL BWP switching if the LTE supports SL multiple bandwidth part (BWP).

Various embodiments of the present disclosure can be applied to a UE-pair specific SL DRX configuration, a UE-pair specific SL DRX pattern, a parameter included in the UE-pair specific SL DRX configuration, or a timer included in the UE-pair specific SL DRX configuration, as well as a default/common SL DRX configuration, a default/common SL DRX pattern, a parameter included in the default/common SL DRX configuration, or a timer included in the default/common SL DRX configuration.

In addition, in the present disclosure, for example, 'on-duration' may be an active time period (the duration operating in a wake-up state (RF module "on") to receive/transmit a wireless signal). For example, 'off-duration' may be a sleep time period (the duration operating in a sleep mode (RF module "off") for power saving) (it does not mean that the transmitting UE should operate in a sleep mode compulsorily during the sleep time period, and if necessary, the transmitting UE may be allowed to operate in an active time for a while for sensing operation/transmission operation even during the sleep time). In addition, for example, whether various embodiments of the present disclosure are applied may be configured differently or independently, based on a resource pool, a congestion level, a service priority, a service type, a QoS requirement (e.g., latency, reliability), a PQI, a traffic type (e.g., periodic generation, aperiodic generation) or an SL transmission resource allocation mode (mode 1, mode 2). For example, parameters (e.g., threshold) related to various embodiments of the present disclosure may be configured differently or independently, based on a resource pool, a congestion level, a service priority, a service type, a QoS requirement (e.g., latency, reliability), a PQI, a traffic type (e.g., periodic generation, aperiodic generation) or an SL transmission resource allocation mode (mode 1, mode 2).

For example, whether various embodiments of the present disclosure are applied may be configured differently or independently, based on at least one of a resource pool (e.g., a resource pool in which PSFCH is configured, a resource pool in which PSFCH is not configured), a service/packet type, a priority, a QoS requirement (e.g., URLLC/EMBB traffic, reliability, latency), a PQI, a PFI, a cast type (e.g., unicast, groupcast, broadcast), a congestion level (e.g., CBR), a resource pool congestion level, an SL HARQ feedback scheme (e.g., NACK only feedback scheme, ACK/NACK feedback scheme), MAC PDU transmission with HARQ feedback enabled, MAC PDU transmission with HARQ feedback disabled, whether PUCCH-based SL HARQ feedback reporting operation is configured, whether to perform pre-emption, whether to perform re-evaluation, re-selection of resources based on pre-emption, re-selection of resources based on re-evaluation, an L1 source identifier, an L1 destination identifier, an L2 source identifier, an L2 destination identifier, a combination identifier of an L1 source layer ID and an L1 destination layer ID, a combination identifier of an L2 source layer ID and an L2 destination layer ID, a combination identifier of a pair of an L1 source layer ID and an L1 destination layer ID and a cast type, a combination identifier of a pair of an L2 source layer ID and an L2 destination layer ID and a cast type, a PC5 RRC connection/link, whether SL DRX is performed, whether SL DRX is supported, an SL mode type (resource allocation mode 1, resource allocation mode 2), reservation of periodic resources or reservation of aperiodic resources.

For example, parameter configuration values related to various embodiments of the present disclosure may be configured differently or independently, based on at least one of a resource pool (e.g., a resource pool in which PSFCH is configured, a resource pool in which PSFCH is not configured), a service/packet type, a priority, a QoS requirement (e.g., URLLC/EMBB traffic, reliability, latency), a PQI, a PFI, a cast type (e.g., unicast, groupcast, broadcast), a congestion level (e.g., CBR), a resource pool congestion level, an SL HARQ feedback scheme (e.g., NACK only feedback scheme, ACK/NACK feedback scheme), MAC PDU transmission with HARQ feedback enabled, MAC PDU transmission with HARQ feedback disabled, whether PUCCH-based SL HARQ feedback reporting operation is configured, whether to perform pre-emption, whether to perform re-evaluation, re-selection of resources based on pre-emption, re-selection of resources based on re-evaluation, an L1 source identifier, an L1 destination identifier, an L2 source identifier, an L2 destination identifier, a combination identifier of an L1 source layer ID and an L1 destination layer ID, a combination identifier of an L2 source layer ID and an L2 destination layer ID, a combination identifier of a pair of an L1 source layer ID and an L1 destination layer ID and a cast type, a combination identifier of a pair of an L2 source layer ID and an L2 destination layer ID and a cast type, a PC5 RRC connection/link, whether SL DRX is performed, whether SL DRX is supported, an SL mode type (resource allocation mode 1, resource allocation mode 2), reservation of periodic resources or reservation of aperiodic resources.

In the present disclosure, for example, the "certain time" may be a time during which the UE operates in an active time for a pre-defined time to receive a sidelink signal or sidelink data from another UE. For example, the "certain time" may be a time during which the UE operates in an active time while the timer (an SL DRX retransmission timer, an SL DRX inactivity timer, and/or a timer that guarantees that the RX UE can operate in an active time in the DRX operation) is running in order to receive a sidelink signal or sidelink data from another UE.

Various embodiments of the present disclosure can be applied to a millimeter wave (mmWave) SL operation. Whether various embodiments of the present disclosure are applied can be applied to a millimeter wave (mmWave) SL operation. Parameter configuration values related to various embodiments of the present disclosure can be applied to a millimeter wave (mmWave) SL operation.

Additionally, for example, the base station may configure an SL resource pool for each QoS profile. For example, the base station may configure an SL resource pool for each service requirement.

For example, the base station may configure an SL resource pool based on a transmission profile reported by the LTE to the base station. For example, the transmission profile may include information on whether SL DRX is supported and a service type. For example, the base station may independently configure a resource pool for LTEs capable of supporting SL DRX and a resource pool for LTEs incapable of supporting SL DRX, based on the transmission profile reported by the UE.

For example, the base station may configure an SL resource pool for each characteristic of a transmission profile. For example, the base station may independently configure a resource pool for SL DRX capable UEs and a resource pool for SL DRX incapable UEs.

For example, the UE may select an SL resource pool based on a transmission profile from among resource pools configured by the base station. For example, regardless of whether the UE reports the transmission profile to the base station, the base station may configure resource pools (e.g., a resource pool for DRX capable LTEs and a resource pool for DRX incapable UEs).

For example, the transmission profile may be transferred from the V2X layer of the UE (transmitting UE and receiving UE) to the AS layer.

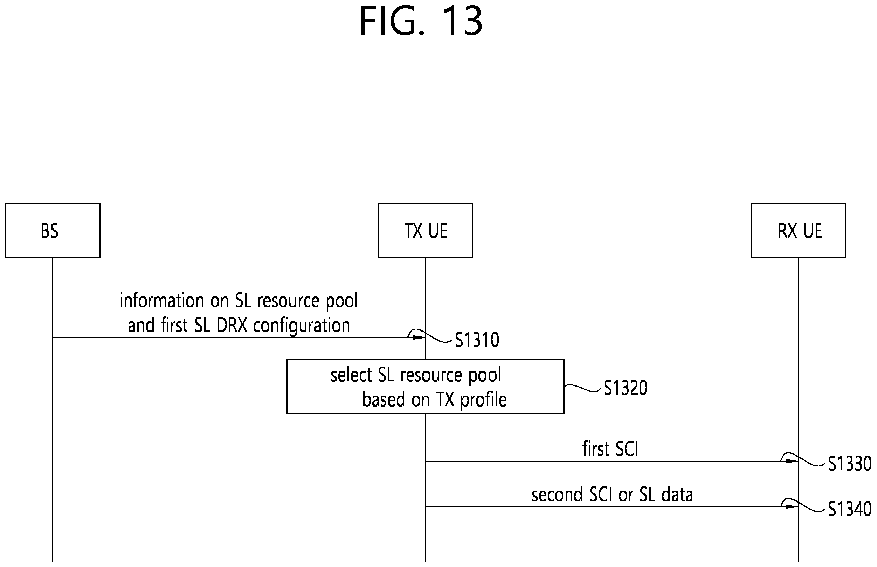

FIG. 13 shows a procedure for a transmitting UE to perform SL communication based on an SL DRX configuration and an SL resource pool, based on an embodiment of the present disclosure. The embodiment of FIG. 13 may be combined with various embodiments of the present disclosure.

Referring to FIG. 13, in step S 1310, the transmitting LTE may receive information on a first sidelink (SL) discontinuous reception (DRX) configuration and an SL resource pool from the base station. For example, the first SL DRX configuration may include at least one of information on a timer related to SL DRX, information on an offset related to SL DRX, or information on a cycle related to SL DRX.

For example, the information on the SL resource pool may include a resource pool supporting SL DRX and a resource pool not supporting SL DRX.

For example, an SL resource pool may be configured for each QoS requirement or QoS profile. For example, an SL resource pool may be configured based on a transmission profile. For example, an SL resource pool may be configured for each transmission profile, and the transmission profile may be configured as an indicator for distinguishing whether a service supports an SL DRX operation.

For example, a second SL DRX configuration may be determined based on information on an SL service.

For example, pattern information related to SL DRX may be transferred from the V2X layer of the first device 100 to the access stratum (AS) layer of the first device 100. For example, pattern information related to SL DRX may be determined based on a quality of service (QoS) requirement of the SL service. For example, pattern information related to SL DRX may include at least one of cycle information related to SL DRX, on-duration information related to SL DRX, or off-duration information related to SL DRX. For example, the second SL DRX configuration may be determined based on the pattern information related to SL DRX.

For example, the information on the SL service and the second SL DRX configuration may be transmitted to the base station. For example, the information on the SL service may include at least one of a layer 2 (L2) destination identifier (ID), a pair of an L2 source ID and an L2 destination ID, a QoS profile, and a transmission profile, a PC5 QoS parameter (PQI), a PC5 QoS flow identifier (PFI), or packet delay budget (PDB). For example, the first SL DRX configuration may be determined based on the second SL DRX configuration and the information on the SL service.

In step S1320, the transmitting UE may select an SL resource pool based on the transmission profile. For example, the transmission profile may be pre-configured for the transmitting UE. For example, the transmission profile may be received by the transmitting UE. For example, the transmission profile may include information on whether SL DRX is supported. For example, based on the transmission profile indicating an SL service supporting SL DRX, the SL resource pool may be selected as a resource pool supporting SL DRX. For example, based on the transmission profile indicating an SL service that does not support SL DRX, the SL resource pool may be selected as a resource pool that does not support SL DRX. For example, an indicator related to the transmission profile may be transmitted from a vehicle to everything (V2X) layer of the transmitting UE and the receiving UE to an access stratum (AS) layer.

In step S1330, the transmitting UE may transmit, to the receiving UE, first sidelink control information (SCI) for scheduling a physical sidelink shared channel (PSSCH) through a physical sidelink control channel (PSCCH), based on the SL resource pool and the first SL DRX configuration. In step S 1340, the transmitting UE may transmit, to the receiving UE, second SCI or SL data through the PSSCH, based on the SL resource pool and the first SL DRX configuration.

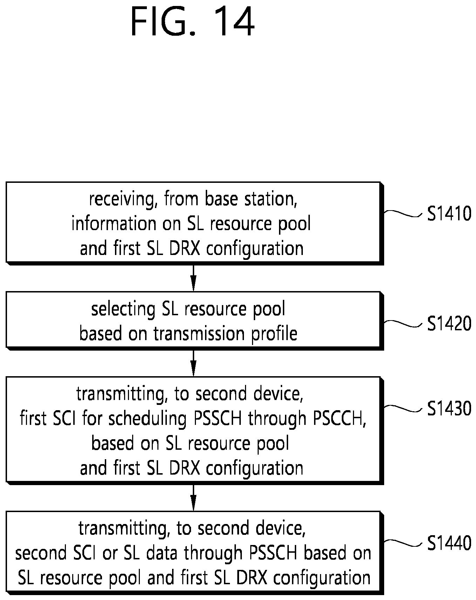

FIG. 14 shows a method for performing, by a first device, SL communication with a second device based on an SL DRX configuration and an SL resource pool, based on an embodiment of the present disclosure. The embodiment of FIG. 14 may be combined with various embodiments of the present disclosure.

Referring to FIG. 14, in step S1410, the first device 100 may receive information on an SL resource pool and a first SL DRX configuration from the base station. For example, the first SL DRX configuration may include at least one of information on a timer related to SL DRX, information on an offset related to SL DRX, or information on a cycle related to SL DRX.

For example, the information on the SL resource pool may include a resource pool supporting SL DRX and a resource pool not supporting SL DRX.

For example, an SL resource pool may be configured for each QoS requirement or QoS profile. For example, an SL resource pool may be configured based on a transmission profile. For example, an SL resource pool may be configured for each transmission profile, and the transmission profile may be configured as an indicator for distinguishing whether a service supports an SL DRX operation.

For example, a second SL DRX configuration may be determined based on the information on the SL service.

For example, pattern information related to SL DRX may be transferred from the V2X layer of the first device 100 to the access stratum (AS) layer of the first device 100. For example, pattern information related to SL DRX may be determined based on a quality of service (QoS) requirement of the SL service. For example, pattern information related to SL DRX may include at least one of cycle information related to SL DRX, on-duration information related to SL DRX, or off-duration information related to SL DRX. For example, the second SL DRX configuration may be determined based on the pattern information related to SL DRX.

For example, the information on the SL service and the second SL DRX configuration may be transmitted to the base station. For example, the information on the SL service may include at least one of a layer 2 (L2) destination identifier (ID), a pair of an L2 source ID and an L2 destination ID, a QoS profile, and a transmission profile, a PC5 QoS parameter (PQI), a PC5 QoS flow identifier (PFI), or packet delay budget (PDB). For example, the first SL DRX configuration may be determined based on the second SL DRX configuration and the information on the SL service.

In step S 1420, the first device 100 may select an SL resource pool based on the transmission profile. For example, the transmission profile may be pre-configured for the first device 100. For example, the transmission profile may be received by the first device 100. For example, the transmission profile may include information on whether SL DRX is supported. For example, based on the transmission profile indicating an SL service supporting SL DRX, the SL resource pool may be selected as a resource pool supporting SL DRX. For example, based on the transmission profile indicating an SL service that does not support SL DRX, the SL resource pool may be selected as a resource pool that does not support SL DRX. For example, an indicator related to the transmission profile may be transmitted from a vehicle to everything (V2X) layer of the first device 100 and the second device 200 to an access stratum (AS) layer.

In step S 1430, the first device 100 may transmit, to the second device 200, first sidelink control information (SCI) for scheduling a physical sidelink shared channel (PSSCH) through a physical sidelink control channel (PSCCH), based on the SL resource pool and the first SL DRX configuration.

In step S 1440, the first device 100 may transmit, to the second device 200, second SCI or SL data through the PSSCH, based on the SL resource pool and the first SL DRX configuration.

The above-described embodiment can be applied to various devices described below. For example, the processor 102 of the first device 100 may control the transceiver 106 to receive information on an SL resource pool and a first SL DRX configuration from the base station. In addition, for example, the processor 102 of the first device 100 may select an SL resource pool based on the transmission profile. In addition, for example, the processor 102 of the first device 100 may control the transceiver 106 to transmit, to the second device 200, first sidelink control information (SCI) for scheduling a physical sidelink shared channel (PSSCH) through a physical sidelink control channel (PSCCH), based on the SL resource pool and the first SL DRX configuration. In addition, for example, the processor 102 of the first device 100 may control the transceiver 106 to transmit, to the second device 200, second SCI or SL data through the PSSCH, based on the SL resource pool and the first SL DRX configuration.

Based on an embodiment of the present disclosure, a first device configured with a discontinuous reception (DRX) configuration and adapted to perform wireless communication may be provided. For example, the first device may comprise: one or more memories storing instructions; one or more transceivers; and one or more processors connected to the one or more memories and the one or more transceivers. For example, the one or more processors may execute the instructions to: receive, from a base station, information on an SL resource pool and a first sidelink (SL) discontinuous reception (DRX) configuration; select the SL resource pool based on a transmission profile; transmit, to a second device, first sidelink control information (SCI) for scheduling a physical sidelink shared channel (PSSCH) through a physical sidelink control channel (PSCCH), based on the SL resource pool and the first SL DRX configuration; and transmit, to the second device, second SCI or SL data through the PSSCH based on the SL resource pool and the first SL DRX configuration.

Based on an embodiment of the present disclosure, an apparatus adapted to control a first user equipment (LTE) configured with a discontinuous reception (DRX) configuration may be provided. For example, the apparatus may comprise: one or more processors; and one or more memories operably connected to the one or more processors and storing instructions. For example, the one or more processors may execute the instructions to: receive, from a base station, information on an SL resource pool and a first sidelink (SL) discontinuous reception (DRX) configuration; select the SL resource pool based on a transmission profile; transmit, to a second UE, first sidelink control information (SCI) for scheduling a physical sidelink shared channel (PSSCH) through a physical sidelink control channel (PSCCH), based on the SL resource pool and the first SL DRX configuration; and transmit, to the second LTE, second SCI or SL data through the PSSCH based on the SL resource pool and the first SL DRX configuration.

Based on an embodiment of the present disclosure, a non-transitory computer-readable storage medium storing instructions may be provided. For example, the instructions, when executed, may cause a first device configured with a discontinuous reception (DRX) configuration to: receive, from a base station, information on an SL resource pool and a first sidelink (SL) discontinuous reception (DRX) configuration; select the SL resource pool based on a transmission profile; transmit, to a second device, first sidelink control information (SCI) for scheduling a physical sidelink shared channel (PSSCH) through a physical sidelink control channel (PSCCH), based on the SL resource pool and the first SL DRX configuration; and transmit, to the second device, second SCI or SL data through the PSSCH based on the SL resource pool and the first SL DRX configuration.

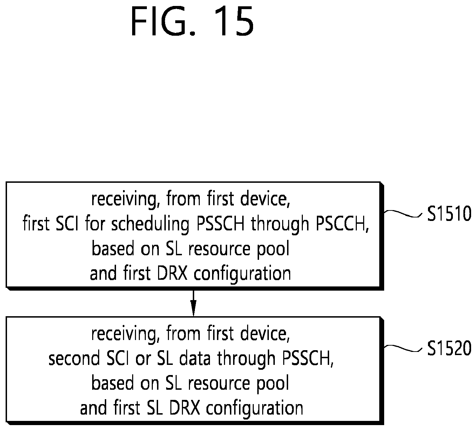

FIG. 15 shows a method for performing, by a second device, SL communication with a first device based on an SL DRX configuration and an SL resource pool, based on an embodiment of the present disclosure. The embodiment of FIG. 15 may be combined with various embodiments of the present disclosure.

Referring to FIG. 15, in step S 1510, the second device 200 may receive first SCI for scheduling a PSSCH through a PSCCH based on an SL resource pool and a first SL DRX configuration from the first device 100.

For example, information on the SL resource pool and the first SL DRX configuration may be received by the first device 100 from a base station. For example, the second device 200 may receive at least one of information on the SL resource pool or the first SL DRX configuration from the first device 100. For example, the SL resource pool may be selected based on a transmission profile.

For example, the first SL DRX configuration may include at least one of information on a timer related to SL DRX, information on an offset related to SL DRX, or information on a cycle related to SL DRX.

For example, the information on the SL resource pool may include a resource pool supporting SL DRX and a resource pool not supporting SL DRX.

For example, an SL resource pool may be configured for each QoS requirement or QoS profile. For example, an SL resource pool may be configured based on a transmission profile. For example, an SL resource pool may be configured for each transmission profile, and the transmission profile may be configured as an indicator for distinguishing whether a service supports an SL DRX operation.

For example, a second SL DRX configuration may be determined based on the information on the SL service.

For example, pattern information related to SL DRX may be transferred from the V2X layer of the first device 100 to the access stratum (AS) layer of the first device 100. For example, pattern information related to SL DRX may be determined based on a quality of service (QoS) requirement of the SL service. For example, pattern information related to SL DRX may include at least one of cycle information related to SL DRX, on-duration information related to SL DRX, or off-duration information related to SL DRX. For example, the second SL DRX configuration may be determined based on the pattern information related to SL DRX.

For example, the information on the SL service and the second SL DRX configuration may be transmitted to the base station. For example, the information on the SL service may include at least one of a layer 2 (L2) destination identifier (ID), a pair of an L2 source ID and an L2 destination ID, a QoS profile, and a transmission profile, a PC5 QoS parameter (PQI), a PC5 QoS flow identifier (PFI), or packet delay budget (PDB). For example, the first SL DRX configuration may be determined based on the second SL DRX configuration and the information on the SL service.

For example, a transmission profile may be pre-configured for the second device 200. For example, the transmission profile may be received by the second device 200. For example, the transmission profile may include information on whether SL DRX is supported. For example, based on the transmission profile representing an SL service supporting SL DRX, the SL resource pool may be selected as a resource pool supporting SL DRX. For example, based on the transmission profile representing an SL service that does not support SL DRX, the SL resource pool may be selected as a resource pool that does not support SL DRX. For example, an indicator related to the transmission profile may be transmitted from a vehicle to everything (V2X) layer of the first device 100 and the second device 200 to an access stratum (AS) layer.

In step S1520, the second device 200 may receive second SCI or SL data from the first device 100 through the PSSCH based on the SL resource pool and the first SL DRX configuration.

The above-described embodiment can be applied to various devices described below. For example, the processor 202 of the second device 200 may control the transceiver 206 to receive, from the first device 100, first SCI for scheduling a PSSCH through a PSCCH based on an SL resource pool and a first SL DRX configuration. In addition, for example, the processor 202 of the second device 200 may control the transceiver 206 to receive second SCI or SL data from the first device 100 through the PSSCH based on the SL resource pool and the first SL DRX configuration.

Based on an embodiment of the present disclosure, a second device configured with a discontinuous reception (DRX) configuration and adapted to perform wireless communication may be provided. For example, the second device may comprise: one or more memories storing instructions; one or more transceivers; and one or more processors connected to the one or more memories and the one or more transceivers. For example, the one or more processors may execute the instructions to: receive, from a first device, first sidelink control information (SCI) for scheduling a physical sidelink shared channel (PSSCH) through a physical sidelink control channel (PSCCH), based on a sidelink (SL) resource pool and a first SL discontinuous reception (DRX) configuration; and receive, from the first device, second SCI or SL data through the PSSCH, based on the SL resource pool and the first SL DRX configuration. For example, information on the SL resource pool and the first SL DRX configuration may be received from a base station to the first device. For example, the SL resource pool may be selected based on a transmission profile.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

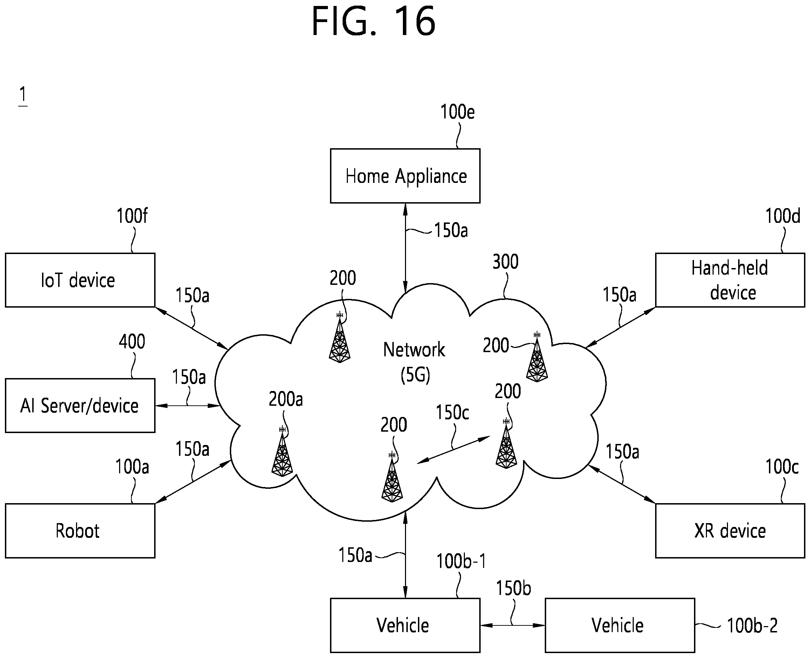

FIG. 16 shows a communication system 1, based on an embodiment of the present disclosure.

Referring to FIG. 16, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an extended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100fBS 200, or BS 200BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

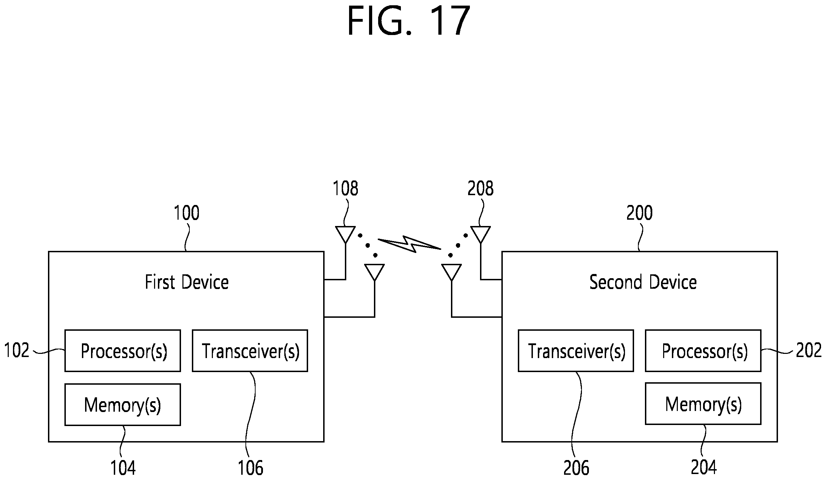

FIG. 17 shows wireless devices, based on an embodiment of the present disclosure.

Referring to FIG. 17, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 16.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

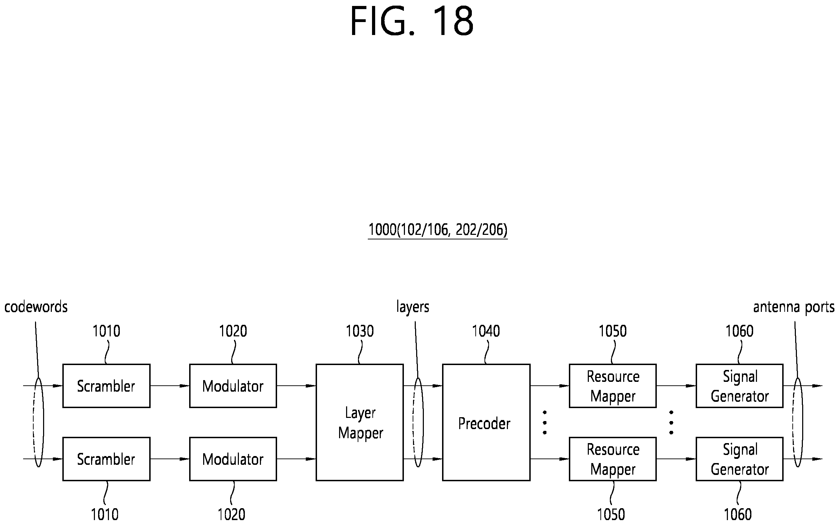

FIG. 18 shows a signal process circuit for a transmission signal, based on an embodiment of the present disclosure.

Referring to FIG. 18, a signal processing circuit 1000 may include scramblers 1010, modulators 1020, a layer mapper 1030, a precoder 1040, resource mappers 1050, and signal generators 1060. An operation/function of FIG. 18 may be performed, without being limited to, the processors 102 and 202 and/or the transceivers 106 and 206 of FIG. 17. Hardware elements of FIG. 18 may be implemented by the processors 102 and 202 and/or the transceivers 106 and 206 of FIG. 17. For example, blocks 1010 to 1060 may be implemented by the processors 102 and 202 of FIG. 17. Alternatively, the blocks 1010 to 1050 may be implemented by the processors 102 and 202 of FIG. 17 and the block 1060 may be implemented by the transceivers 106 and 206 of FIG. 17.

Codewords may be converted into radio signals via the signal processing circuit 1000 of FIG. 18. Herein, the codewords are encoded bit sequences of information blocks. The information blocks may include transport blocks (e.g., a LTL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 18. For example, the wireless devices (e.g., 100 and 200 of FIG. 17) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

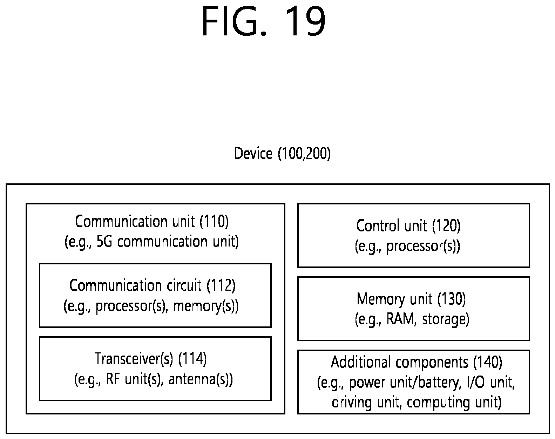

FIG. 19 shows another example of a wireless device, based on an embodiment of the present disclosure. The wireless device may be implemented in various forms according to a use-case/service (refer to FIG. 16).

Referring to FIG. 19, wireless devices 100 and 200 may correspond to the wireless devices 100 and 200 of FIG. 17 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 17. For example, the transceiver(s) 114 may include the one or more transceivers 106 and 206 and/or the one or more antennas 108 and 208 of FIG. 17. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 16), the vehicles (100b-1 and 100b-2 of FIG. 16), the XR device (100c of FIG. 16), the hand-held device (100d of FIG. 16), the home appliance (100e of FIG. 16), the IoT device (100f of FIG. 16), a digital broadcast terminal, a hologram device, a public safety device, an MTC device, a medicine device, a fintech device (or a finance device), a security device, a climate/environment device, the AI server/device (400 of FIG. 16), the BSs (200 of FIG. 16), a network node, etc. The wireless device may be used in a mobile or fixed place according to a use-example/service.

In FIG. 19, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 19 will be described in detail with reference to the drawings.

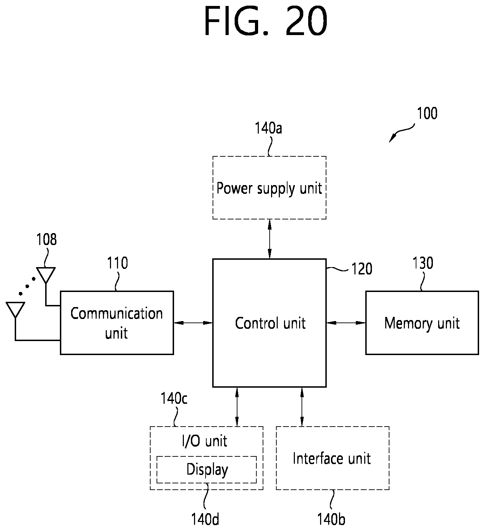

FIG. 20 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT).

Referring to FIG. 20, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 19, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

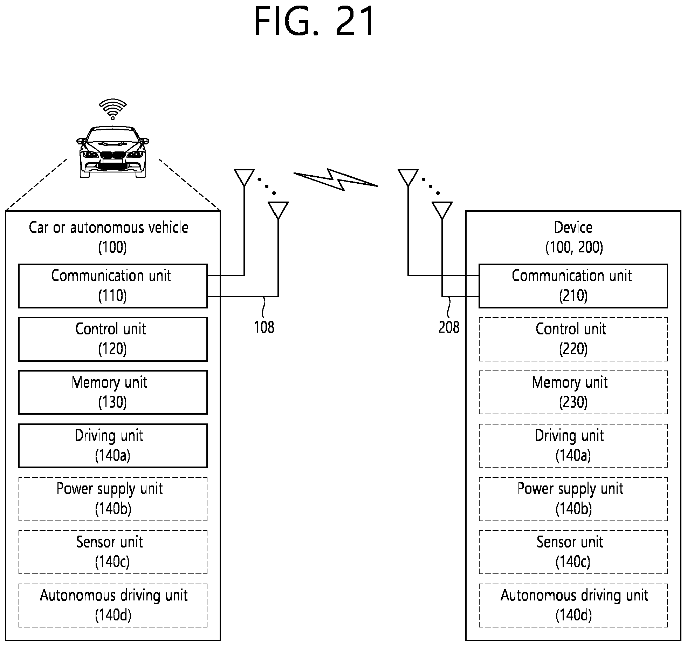

FIG. 21 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc.

Referring to FIG. 21, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 19, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing wireless communication by a first device, the method comprising:
receiving, from a base station, information on an SL resource pool and a first sidelink (SL) discontinuous reception (DRX) configuration;
selecting the SL resource pool based on a transmission profile;
transmitting, to a second device, first sidelink control information (SCI) for scheduling a physical sidelink shared channel (PSSCH) through a physical sidelink control channel (PSCCH), based on the SL resource pool and the first SL DRX configuration; and
transmitting, to the second device, second SCI or SL data through the PSSCH based on the SL resource pool and the first SL DRX configuration.

2. The method of claim 1, wherein the transmission profile is pre-configured for the first device.

3. The method of claim 1, wherein an indicator related to the transmission profile is transmitted from a vehicle to everything (V2X) layer of the first device and the second device to an access stratum (AS) layer.

4. The method of claim 1, wherein the transmission profile includes information on whether SL DRX is supported.

5. The method of claim 1, wherein the information on the SL resource pool includes a resource pool supporting SL DRX and a resource pool not supporting SL DRX.

6. The method of claim 4, wherein, based on the transmission profile representing an SL service supporting SL DRX, the SL resource pool is selected as the resource pool supporting SL DRX.

7. The method of claim 1, wherein the SL resource pool is configured for each quality of service (QoS) requirement or QoS profile.

8. The method of claim 1, wherein the SL resource pool is configured based on the transmission profile.

9. The method of claim 1, wherein the SL resource pool is configured for each transmission profile, and
wherein the transmission profile is configured as an indicator for distinguishing whether a service supports an SL DRX operation.

10. The method of claim 9, wherein a second SL DRX configuration and information on an SL service are transmitted to the base station.

11. The method of claim 10, wherein the information on the SL service includes at least one of a layer 2 (L2) destination identifier (ID), a pair of an L2 source ID and an L2 destination ID, a QoS profile, a transmission profile, and a PC5 QoS parameter (PQI), a PC5 QoS flow identifier (PFI), or packet delay budget (PDB).

12. The method of claim 9, wherein the first SL DRX configuration is determined based on a second SL DRX configuration and information on an SL service.

13. The method of claim 1, wherein the first SL DRX configuration includes at least one of information on a timer related to SL DRX, information on an offset related to SL DRX, or information on a cycle related to SL DRX.

14. A first device adapted to perform wireless communication, the first device comprising:
one or more memories storing instructions;
one or more transceivers; and
one or more processors connected to the one or more memories and the one or more transceivers, wherein the one or more processors execute the instructions to:
receive, from a base station, information on an SL resource pool and a first sidelink (SL) discontinuous reception (DRX) configuration;
select the SL resource pool based on a transmission profile;
transmit, to a second device, first sidelink control information (SCI) for scheduling a physical sidelink shared channel (PSSCH) through a physical sidelink control channel (PSCCH), based on the SL resource pool and the first SL DRX configuration; and
transmit, to the second device, second SCI or SL data through the PSSCH based on the SL resource pool and the first SL DRX configuration.

15. An apparatus adapted to control a first user equipment (UE), the apparatus comprising:
one or more processors; and
one or more memories operably connected to the one or more processors and storing instructions, wherein the one or more processors execute the instructions to:
receive, from a base station, information on an SL resource pool and a first sidelink (SL) discontinuous reception (DRX) configuration;
select the SL resource pool based on a transmission profile;
transmit, to a second UE, first sidelink control information (SCI) for scheduling a physical sidelink shared channel (PSSCH) through a physical sidelink control channel (PSCCH), based on the SL resource pool and the first SL DRX configuration; and
transmit, to the second UE, second SCI or SL data through the PSSCH based on the SL resource pool and the first SL DRX configuration.

16. A non-transitory computer-readable storage medium storing instructions that, when executed, cause a first device to:
receive, from a base station, information on an SL resource pool and a first sidelink (SL) discontinuous reception (DRX) configuration;
select the SL resource pool based on a transmission profile;
transmit, to a second device, first sidelink control information (SCI) for scheduling a physical sidelink shared channel (PSSCH) through a physical sidelink control channel (PSCCH), based on the SL resource pool and the first SL DRX configuration; and
transmit, to the second device, second SCI or SL data through the PSSCH based on the SL resource pool and the first SL DRX configuration.

17. A method for performing wireless communication by a second device, the method comprising:
receiving, from a first device, first sidelink control information (SCI) for scheduling a physical sidelink shared channel (PSSCH) through a physical sidelink control channel (PSCCH), based on a sidelink (SL) resource pool and a first SL discontinuous reception (DRX) configuration; and
receiving, from the first device, second SCI or SL data through the PSSCH, based on the SL resource pool and the first SL DRX configuration,
wherein information on the SL resource pool and the first SL DRX configuration are received from a base station to the first device, and
wherein the SL resource pool is selected based on a transmission profile.

18. The method of claim 17, wherein the transmission profile includes information on whether SL DRX is supported.

19. A second device adapted to perform wireless communication, the second device comprising:
one or more memories storing instructions;
one or more transceivers; and
one or more processors connected to the one or more memories and the one or more transceivers, wherein the one or more processors execute the instructions to:
receive, from a first device, first sidelink control information (SCI) for scheduling a physical sidelink shared channel (PSSCH) through a physical sidelink control channel (PSCCH), based on a sidelink (SL) resource pool and a first SL discontinuous reception (DRX) configuration; and
receive, from the first device, second SCI or SL data through the PSSCH, based on the SL resource pool and the first SL DRX configuration,
wherein information on the SL resource pool and the first SL DRX configuration are received from a base station to the first device, and
wherein the SL resource pool is selected based on a transmission profile.

20. The second device of claim 19, wherein the transmission profile includes information on whether SL DRX is supported.
